# EUROPEAN PATENT APPLICATION

(11) **EP 4 397 160 A1**
(43) Date of publication of application: **10.07.2024**
(21) Application number: 23215397.3
(22) Date of filing: 10.12.2023
(51) Int. Cl.: A01C 5/06, A01C 7/20

(54) **ROW UNIT COUPLING DEVICE**

(30) Priority: 04.01.2023 US 202318150009
(71) Applicant: Deere & Company, Moline, IL 61265 (US)
(72) Inventor: GARNER, ELIJAH B, 68163 Mannheim (DE); DHOBALE, DNYANESH K, 68163 Mannheim (DE)
(74) Representative: Reichert, Christian

(57) **Abstract**

A row unit coupling device (100) for securing a first row unit (50a) and a second row unit (50b) to a tool bar (22) of an agricultural implement is disclosed. The row unit coupling device (100) comprises a swing arm (102) having a first end (126) and a second end (128), the first end (126) is configured for pivotal coupling to the tool bar (22). The row unit coupling device (100) comprises further a walking beam (104) having a central beam (138), a first row adapter (140a), and a second row adapter (140b). The central beam (138) having a proximal end (116) and a distal end (118), the first row adapter (140a) and the second row adapter (140b) are secured to the central beam (138) on opposing sides of a position at which the swing arm (102) is pivotally coupled to the central beam (138). The first row adapter (140a) is configured to be coupled to the first row unit (50a), the second row adapter (140b) is configured to be coupled to the second row unit (50b).

## Description

### FIELD OF THE DISCLOSURE

The present disclosure generally relates to agricultural planters, and, more specifically, to devices for arranging pairs of seeding row units for agricultural planters.

### BACKGROUND

Agricultural planters, such as multi-row crop planters, are typically pulled by a tractor, or other work vehicle, and can plant seeds at a selected depth within a trench formed in the soil. The depth at which seed is to be planted in the ground can be set for each row unit, such as, for example, via a mechanical depth adjustment mechanism. Such a depth setting can be based on a variety of different criteria, including, for example, the seed type and environmental conditions, such as, for example, soil composition, moisture levels, and weather predictions, among other considerations.

The row units of the multi-row crop planters are typically designed to be aligned substantially parallel to the travel direction of the tractor when being pulled through a field. Further, the selected depth at which seed is to be planted is often based, at least in part, on the premise that the planting of the seed via a row unit will occur in a direction in which the row unit is generally perpendicular to the adjacent ground surface. However, undulations in the ground surface along which row units travel can result in deviations in the actual depths at which the row units plant seeds. For example, variances in terrain of a field can result in a lifting or tilting of row units, which can prevent seeds from reaching selected planting depths. Additionally, such lifting or tilting of row units can adversely impact the spacing between adjacent seeds that are planted by a row unit.

Row units of a row crop planter are also typically positioned in a side-by-side arrangement wherein each row unit is downstream from an adjacent tool bar of the planter by about the same distance. Thus, the distance between the trenches in which each row unit plants seeds, and thus the distance separating the resulting crop rows, can be at least partially dependent on how close the row units can physically be positioned next to each other. Yet, such an arrangement can adversely impact the ability to provide relatively narrow spacing between crop rows.

What is needed therefore are seeding planters in which row units have enhanced ground following capabilities, and that can also accommodate relatively narrow crop row spacing.

### SUMMARY

The present disclosure may comprise one or more of the following features and combinations thereof.

In one embodiment of the present disclosure, a row unit coupling device for securing a first row unit and a second row unit to a tool bar of an agricultural implement comprises a swing arm and a walking beam, the swing arm having a first end and a second end, the first end configured for pivotal coupling to the tool bar. The walking beam has a central beam, a first row adapter, and a second row adapter. The central beam has a proximal end and a distal end. The first row adapter and the second row adapter are secured to the central beam on opposing sides of a position at which the swing arm is pivotally coupled to the central beam. Additionally, the first row adapter is configured to be coupled to the first row unit, and the second row adapter is configured to be coupled to the second row unit.

In another embodiment, a row unit coupling device for securing a first row unit and a second row unit to a tool bar of an agricultural implement can comprise a mount body adapted to be coupled to the tool bar and a base unit that is slidingly coupled to the mount body, the base unit having a leg segment. The row unit coupling device can further include a biasing element that can be positioned to provide a biasing force to bias the base unit in a downward direction relative to the mount body, an upper arm, and a lower arm. The upper arm can be pivotally coupled to the leg segment to rotate about a first axis of rotation, and can have an upper central segment, an upper proximal end, and an upper distal end. The upper proximal and distal ends can be at opposing ends of the upper arm and offset from each other in a direction that is parallel to the first axis of rotation. Additionally, the upper proximal end can be adapted for pivotal coupling to the first row unit, and the upper distal end can be configured for pivotal coupling to the second row unit. The lower arm can be pivotally coupled to the leg segment to rotate about a second axis of rotation, and can have a lower central segment, a lower proximal end, and a lower distal end. The lower proximal and distal ends can be at opposing ends of the lower arm and offset from each other in a direction that is parallel to the second axis of rotation. Further, the lower proximal end can be adapted for pivotal coupling to the first row unit, and the lower distal end can be configured for pivotal coupling to the second row unit.

In a further embodiment of the present disclosure, a row unit coupling device for securing a first row unit and a second row unit to a tool bar of an agricultural implement can comprise an upper main linkage and a lower main linkage. The upper main linkage can have a first end and a second end, the second end of the upper main linkage configured to be pivotally coupled to the tool bar. The lower main linkage can have a first end and a second end. The second end of the lower main linkage can be configured to be pivotally coupled to the tool bar, and can be positioned below, and parallel to, the upper main linkage. The row unit coupling device can also include a base unit, an upper arm, and a lower arm. The base unit can have an upper portion and a lower portion, the upper portion being pivotally coupled to the first end of the upper main linkage and the first end of the lower main linkage. The upper arm can be pivotally coupled to a lower portion of the base unit to rotate about a first axis of rotation. Further, the upper arm can have an upper central segment, an upper proximal end, and an upper distal end. The upper proximal and distal ends can be at opposing ends of the upper arm and offset from each other in a direction that is parallel to the first axis of rotation. Additionally, the upper proximal end can be adapted for pivotal coupling to the first row unit, and the upper distal end can be configured for pivotal coupling to the second row unit. The lower arm can be pivotally coupled to the lower portion of the base unit to rotate about a second axis of rotation. The lower arm can have a lower central segment, a lower proximal end, and a lower distal end. The lower proximal and distal ends can be at opposing ends of the lower arm and offset from each other in a direction that is parallel to the second axis of rotation. Additionally, the lower proximal end can be adapted for pivotal coupling to the first row unit, and the lower distal end can be configured for pivotal coupling to the second row unit.

In another embodiment, a row unit coupling device for securing a first row unit and a second row unit to a tool bar of an agricultural implement can comprise a base unit having an upper portion and a lower portion, the upper portion being configured for coupling to the tool bar. The row unit coupling device can also include an upper arm and a lower arm, the upper arm comprising a first upper arm segment and a second upper arm segment. The first upper arm segment can extend to an upper proximate end of the upper arm, and the second upper arm segment can extend to an upper distal end of the upper arm. Additionally, the first upper arm segment can be pivotally coupled to the base unit to rotate about a first axis, and the second upper arm segment can be pivotally coupled to the base unit to rotate, independent of rotation of the first upper arm segment, about a second axis that may, or may not, be positioned along the first axis. The upper proximal and distal ends can be at opposing ends of the upper arm and offset from each other in a direction that is parallel to the first axis of rotation.

Additionally, the upper proximal end can be adapted for pivotal coupling to the first row unit, and the upper distal end can be configured for pivotal coupling to the second row unit. The lower arm can comprise a first lower arm segment and a second lower arm segment, the first lower arm segment extending to a lower proximate end of the lower arm, and the second lower arm segment extending to a lower distal end of the lower arm. The first lower arm segment can be pivotally coupled to the base unit to rotate about a third axis. The second lower arm segment can be pivotally coupled to the base unit to rotate, independent of rotation of the first lower arm segment, about a fourth axis that may, or may not, be positioned along the third axis. Additionally, the lower proximal and distal ends can be at opposing ends of the lower arm and offset from each other in a direction that is parallel to the third axis of rotation. Additionally, the lower proximal end can be adapted for pivotal coupling to the first row unit, and the lower distal end can be configured for pivotal coupling to the second row unit.

These and other features of the present disclosure will become more apparent from the following description of the illustrative embodiments.

### BRIEF DESCRIPTION OF THE DRAWINGS

The invention described herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements.
FIG. 1 illustrates an exemplary agricultural seeder in the form of a row crop planter being pulled by an agricultural machine along a field;
FIG. 2 illustrates an exemplary row unit that can be used with the agricultural seeder shown in FIG. 1;
FIGS. 3A and 3B illustrate an exploded view and perspective view, respectively, of a first embodiment of a row unit coupling device forming part of the claimed invention;
FIGS. 4-6 illustrate side, top, and perspective views, respectively, of the row unit coupling device shown in FIGS. 3A and 3B coupled to a pair of row units;
FIGS. 7-9 illustrate side views of the row unit coupling device and row units shown in FIGS. 4-6 coupled to a tool bar and being pulled across various undulations in a ground surface;
FIGS. 10A and 10B illustrate an exploded view and perspective view, respectively, of a second embodiment of a row unit coupling device not forming part of the claimed invention;
FIG. 11 illustrates a side view of the row unit coupling device shown in FIGS. 10A and 10B coupled to a pair of row units;
FIG. 12 illustrates a top view of an upper arm or a lower arm of the row unit coupling device shown in FIGS. 10A and 10b;
FIGS. 13 and 14 illustrate a top view and a perspective view, respectively, of the row unit coupling device shown in FIGS. 10A-10B coupled to a pair of row units;
FIGS. 15-18 illustrate side views of the row unit coupling device and row units shown in

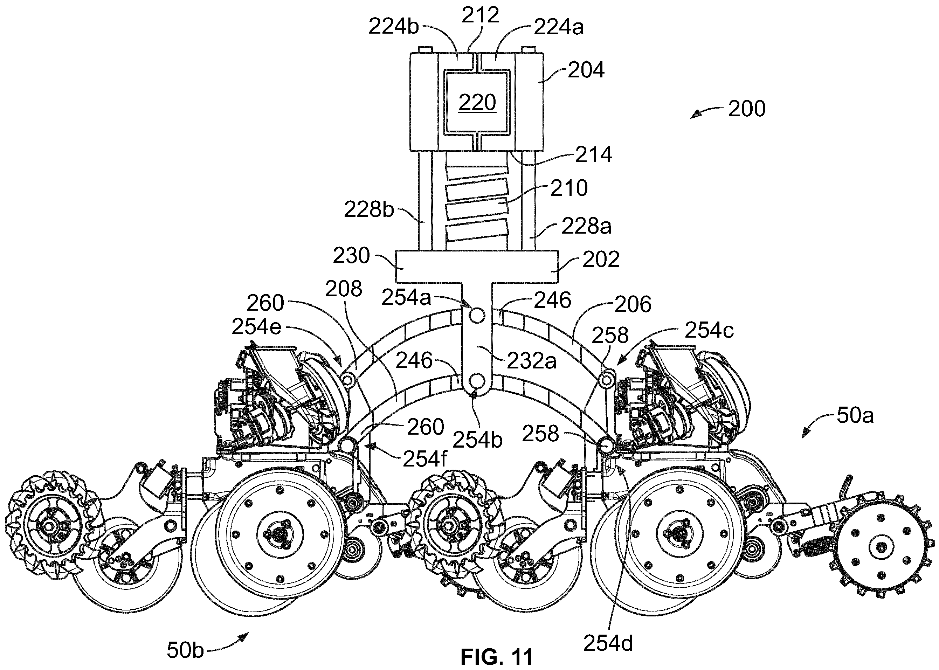

FIGS. 11, 13, and 14 coupled to a tool bar and being pulled across various undulations in a ground surface;

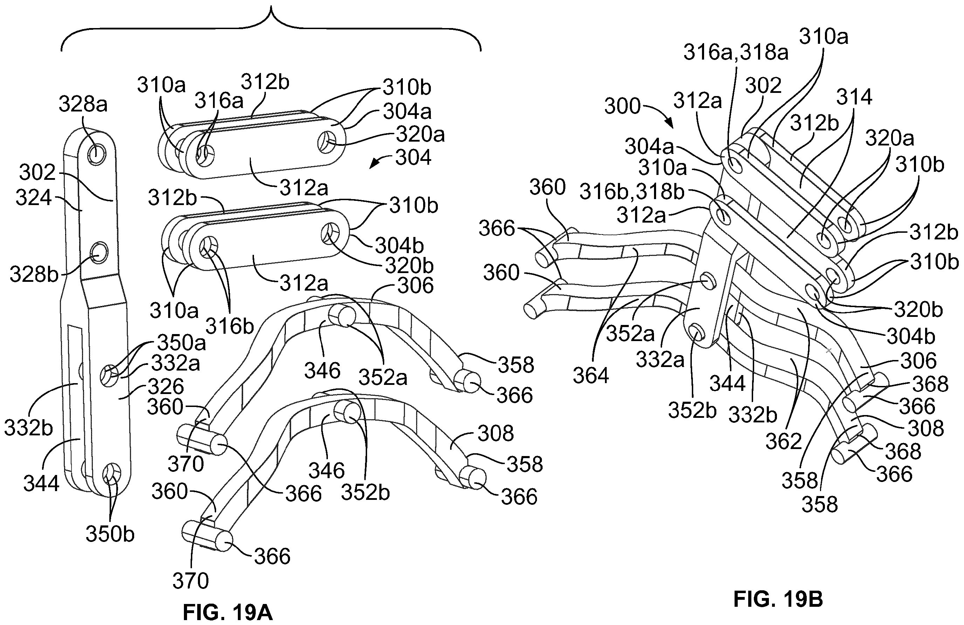

FIGS. 19A and 19B illustrate an exploded view and perspective view, respectively, of a third embodiment of a row unit coupling device not forming part of the claimed invention;;

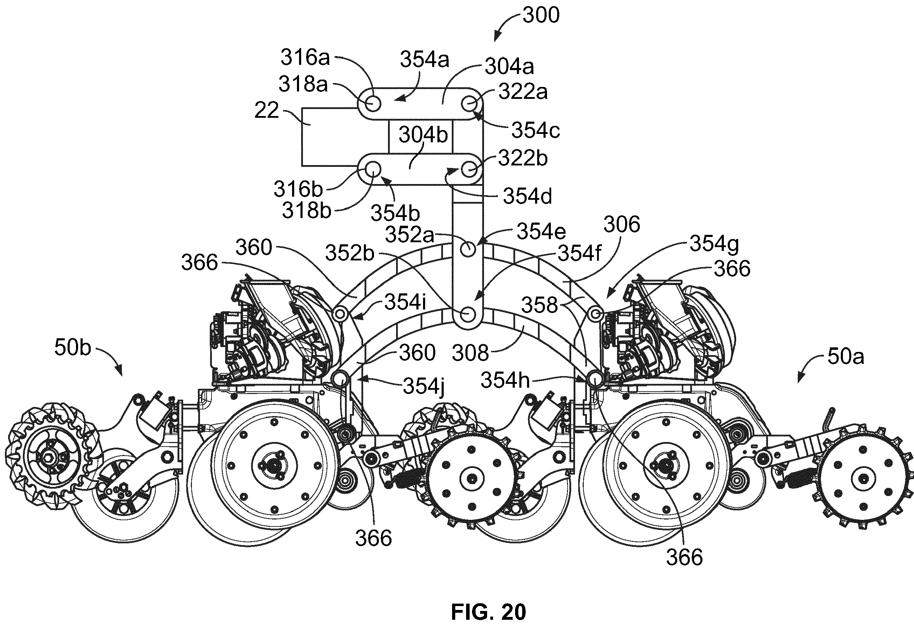

FIGS. 20-22 illustrate side, top, and perspective views, respectively, of the row unit coupling device shown in FIGS. 19A and 19B coupled to a pair of row units;

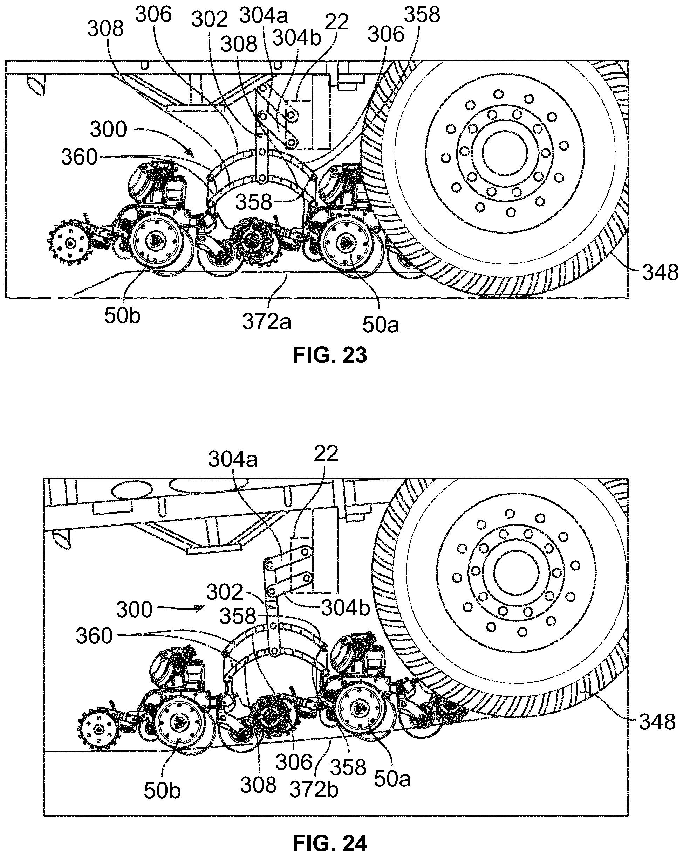

FIGS. 23-26 illustrate side views of the row unit coupling device and row units shown in
FIGS. 20-22 coupled to a tool bar and being pulled across various undulations in a ground surface;

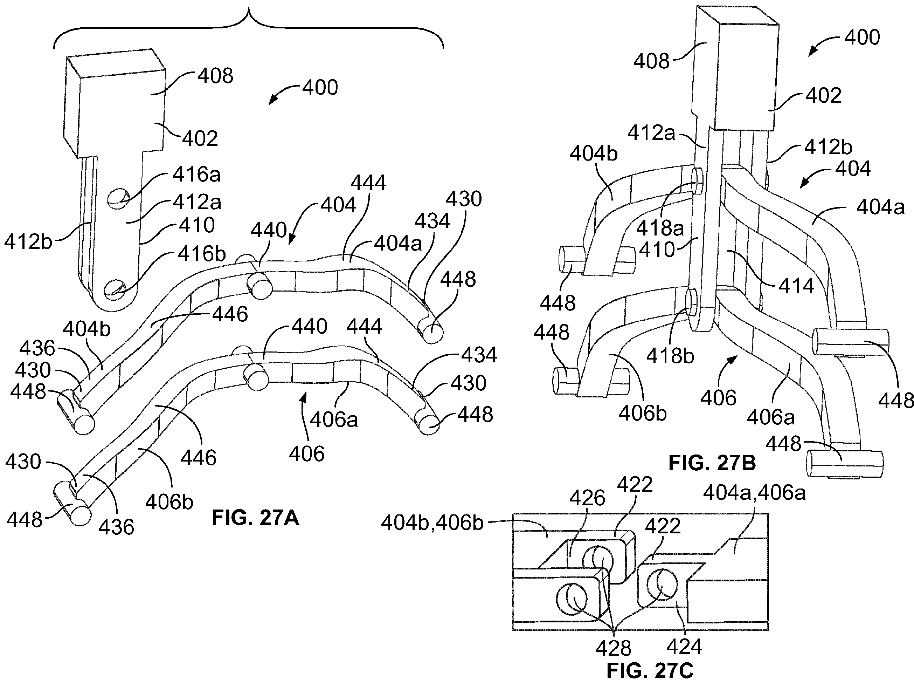

FIGS. 27A and 27B illustrate an exploded view and perspective view, respectively, of a fourth embodiment of a row unit coupling device not forming part of the claimed invention;;
FIG. 27C illustrates a perspective view of portions of exemplary first ends of the first and second upper or lower arm segments;

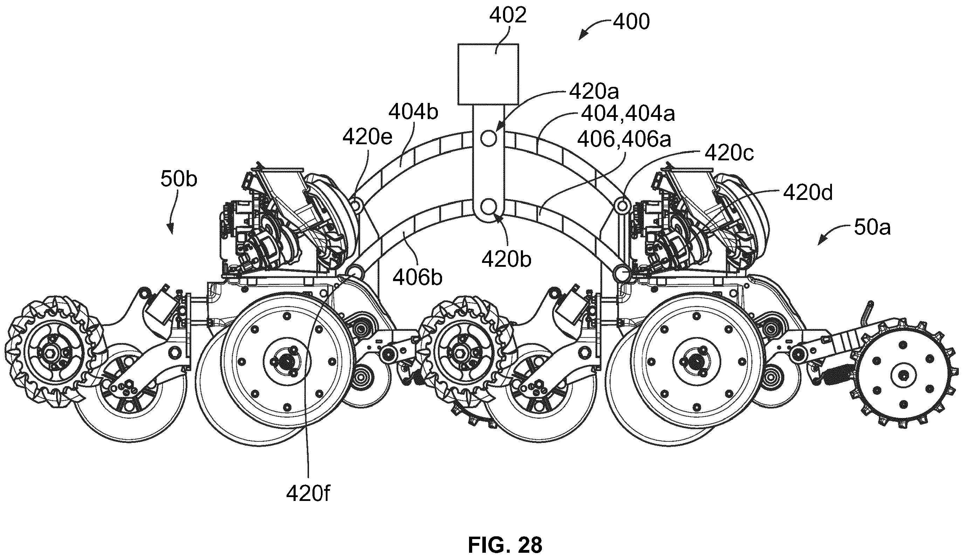

FIGS. 28-30 illustrate side, top, and perspective views, respectively, of the row unit coupling device shown in FIGS. 27A and 27B coupled to a pair of row units; and

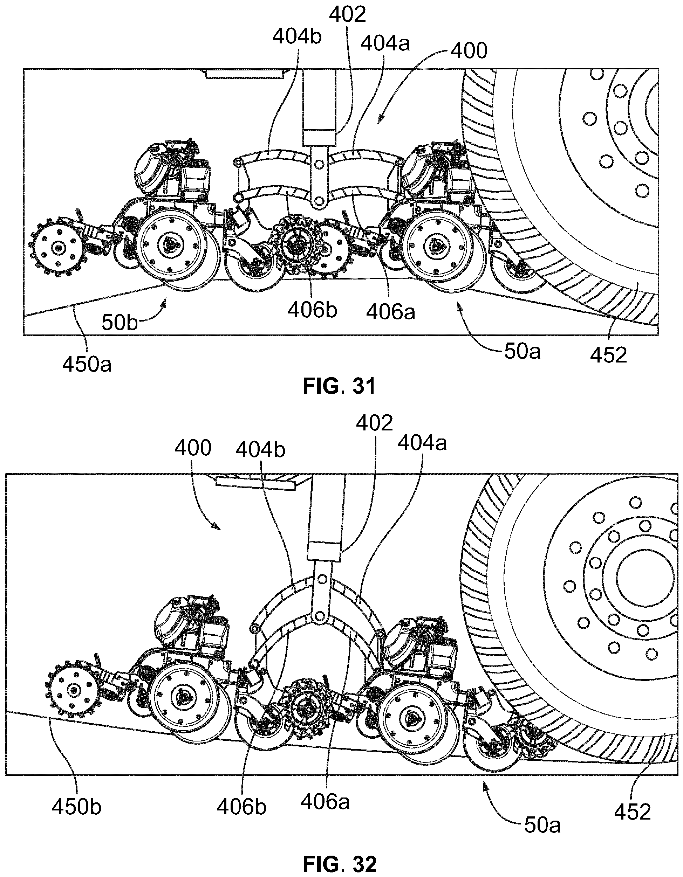

FIGS. 31-34 illustrate side views of the row unit coupling device and row units shown in
FIGS. 28-30 coupled to a tool bar and being pulled across various undulations in a ground surface.

Corresponding reference numerals are used to indicate corresponding parts throughout the several views.

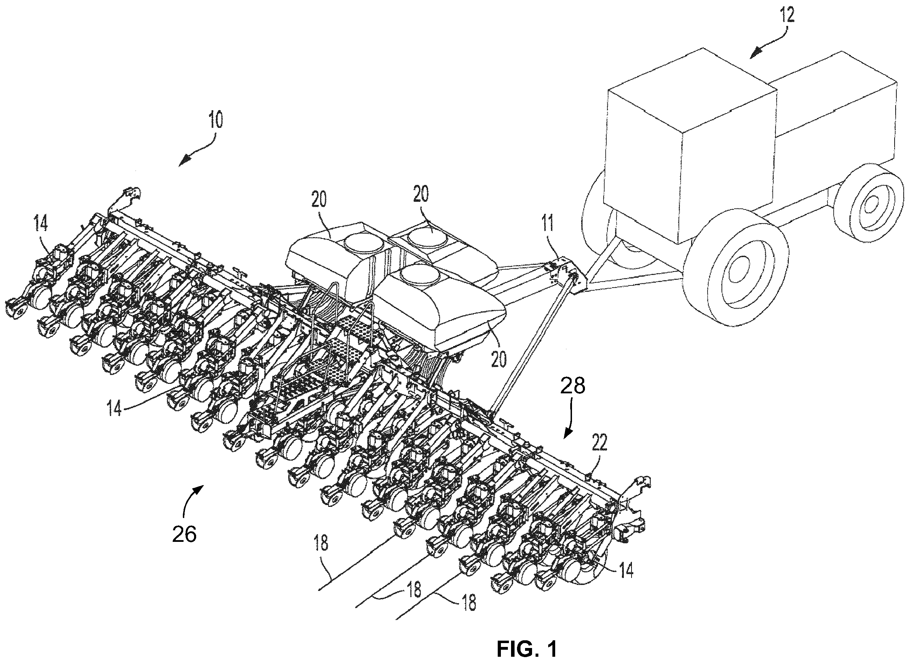

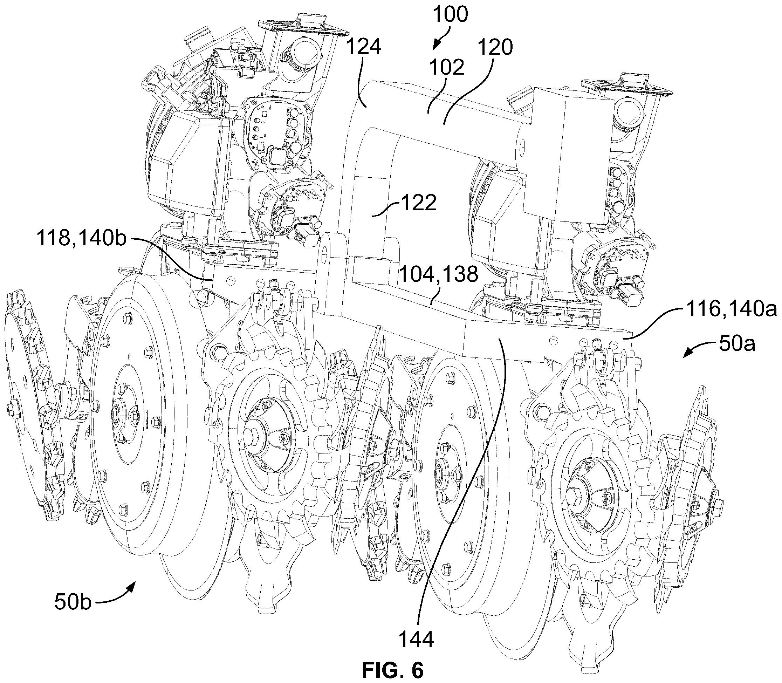

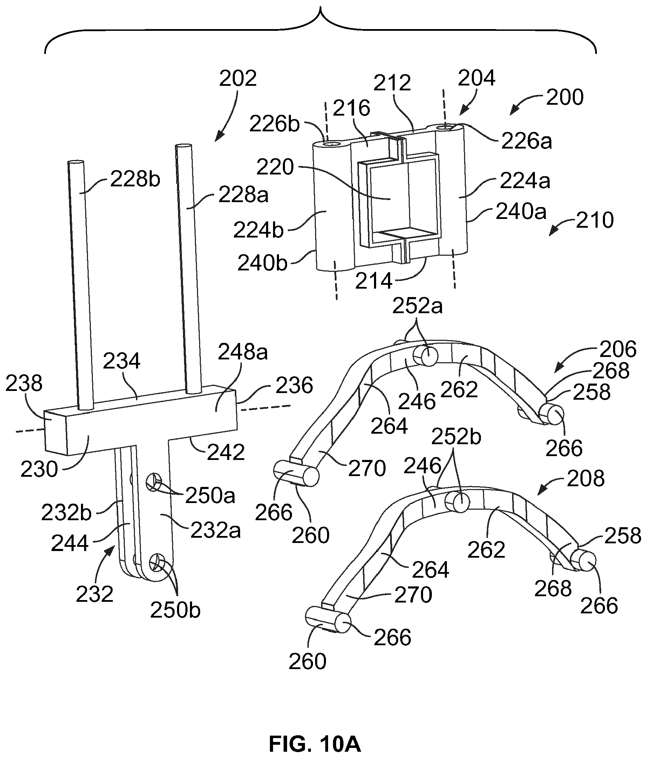

It is noted that FIGS. 10A to 18, FIGS. 19A to 26 and FIGS. 27A to 34 relate to examples which are shown for exemplary reasons and which are not examples forming part of the claimed invention. The claimed invention is rather explained by referencing to FIGS 1,2 and 3A to 9.

### DETAILED DESCRIPTION

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

A number of features described below may be illustrated in the drawings in phantom. Depiction of certain features in phantom is intended to convey that those features may be hidden or present in one or more embodiments, while not necessarily present in other embodiments. Additionally, in the one or more embodiments in which those features may be present, illustration of the features in phantom is intended to convey that the features may have location(s) and/or position(s) different from the locations(s) and/or position(s) shown. FIG. 1 illustrates an exemplary agricultural seeder 10, and moreover a seeder 10 in the form of a row crop planter according to the invention as claimed. A work vehicle in the form of a tractor 12 can be coupled with, and moves, the seeder 10 with a suitable coupling arrangement, such as, for example, a draw bar or 3-point hitch arrangement 11. Other embodiments however are contemplated, including an autonomous tractor pulling the seeder 10, as well as an entirely self-contained autonomous seeder in which the seeder, including the row units and a propulsion system for the seeder, are a complete and unitary seeding system.

The illustrated seeder 10 includes a plurality of row units 14. According to certain embodiments, each row unit 14 can have a substantially identically configured. Each row unit 14 can be configured to deposit seeds of varying sizes in respective furrows 18, not all of which are illustrated, in the soil for raising crops. In some embodiments, two or more of the row units 14 are configured to deposit seeds of different sizes and/or seeds for different crop types. Typically, however, the size of the seeds being deposited is the same for each row unit 14. In other embodiments, seeds of different sizes may be deposited side by side in adjacent rows at different planting depths, which can depend on the size of the seed.

A plurality of seed bins 20 can be operatively connected to each of the row units 14, and are configured to hold seeds for planting. In other embodiments, a single seed bin is used to supply seeds to all row units 14. In operation, each seed bin 20 can hold the same type of seeds or different types of seeds, which may be directed to each of the row units 14, as necessary. A tool bar 22 can extend, and is coupled, to each of the row units 14 to maintain a predetermined spacing between furrows 18. In some embodiments, a rockshaft may be located over or above the tool bar 22. In some embodiments, the spacing between row units 14 is adjustable to provide for crops of different types that require spacing between furrows 18 based on the type of seed.

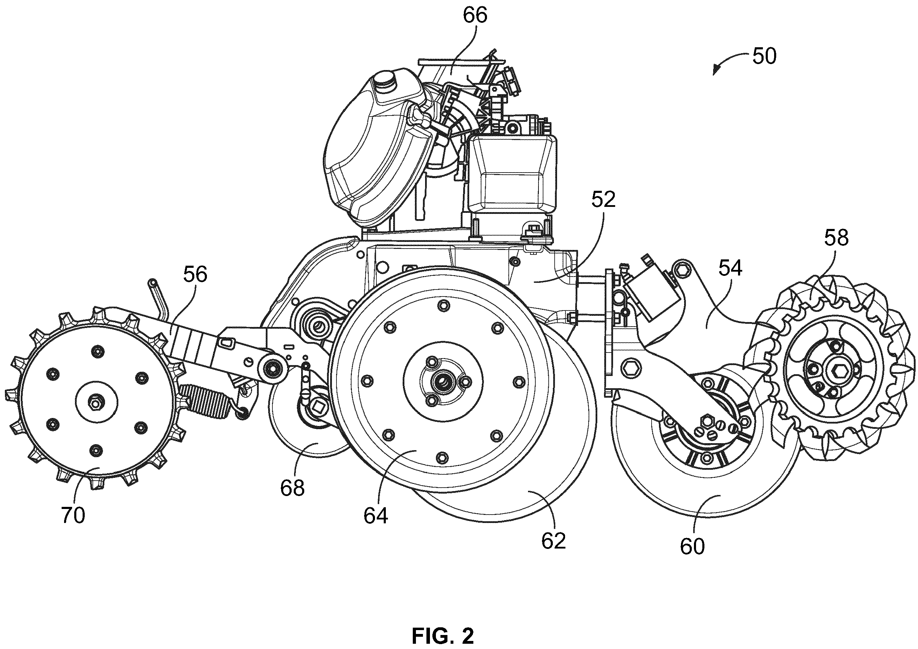

While the exemplary seeder 10 shown in FIG. 1 illustrates each of the row units 14 being in a side-by-side arrangement in which the row units 14 are generally in a parallel arrangement and/or at about a same distance from the tool bar 22, embodiments discussed herein can accommodate a staggering in the alignment of adj acent row units 14. For example, according to certain embodiments discussed below, a row units 14 (FIG. 2) can be positioned further upstream of an adjacent or neighboring row unit 14. In some instances, such a staggered alignment can result in a row unit 14 being in closer proximity to the tool bar 22 than adjacent row units 14. Additionally, with respect to some embodiments, such a staggered alignment can result in at least a portion of one row unit being one side of the tool bar 22, such as, for example, an upstream or proximate side 28 of the tool bar 22, while an adjacent row unit 14 can be positioned on the other, or downstream or distal side 26 of the tool bar 22. Such a staggered alignment of row units 14 can be configured such that narrower porti ons of adjacent row units 14 are directly adjacent to each other, and/or wider portions of a row unit 14 are adjacent to a narrower portion of an adjacent row unit 14. By providing such a staggered alignment in which wider portions of adjacent row units are offset from each other in at least a direction of travel of the row units 14, adjacent row units 14 can be positioned in closer proximity with each other, thereby providing the capability to reduce the spacing between furrows 18, and accommodate the planting of seeds at locations that provide relatively narrow crop spacing.

FIG. 2 illustrates an exemplary row unit 50 that can, along with other types of row units 14, be utilized with embodiments of the subject application. The illustrated row unit 50 includes a central frame 52 that is pivotally coupled to a front frame arm 54 and a rear frame arm 56.

The front frame arm 54 in the illustrated exemplary row unit 50 can be coupled to a pair of row cleaners 58 and a coulter blade 60. The central frame 52 can be coupled to a disc 62, also known as a blade, shank, knife, or a cutting device or member. The disc 62 can extend inwardly into the ground at least until one or more gage wheels 64, also known as a depthgaging or surface following device or member, engages the soil. According to the illustrated row unit 50, gage wheels 64 are positioned on opposing sides of the disc 62. Additionally, with respect to at least certain types of row units, the relationship between the gage wheels 64 and the disc 62 can be adjusted so as to at least assist in adjusting a depth to which the row unit 50 deposits seeds in the adjacent soil. According to certain embodiments, seed that is received at or around a hopper 66 of the row unit 50 can travel through at least a portion of the row unit 50 before being deposited from the row unit 50 at or around a base of the disc 62. The row unit 50 can include a press wheel 68 downstream of the location at which the row unit 50 is to deposit seed into the soil. Further, the rear frame arm 56 in the illustrated row unit is depicted as being coupled to a pair of closing wheels 70.

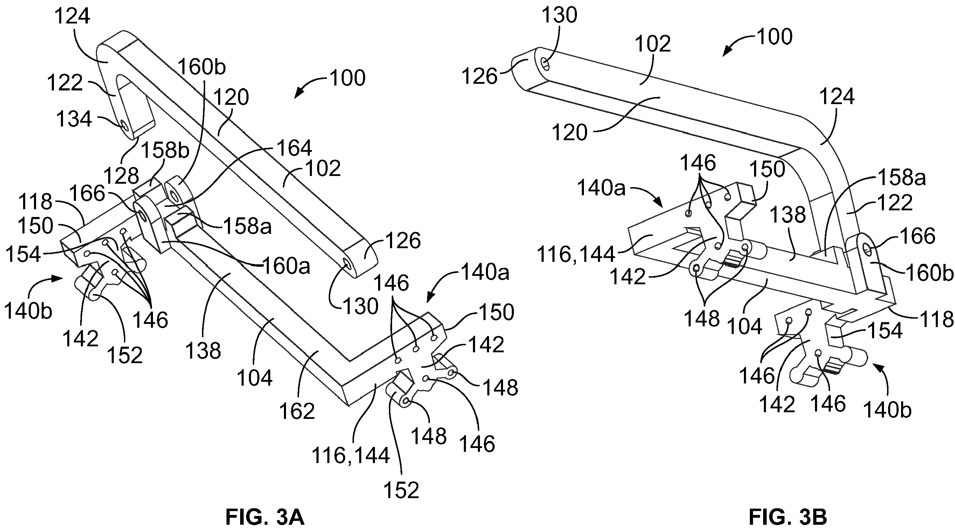

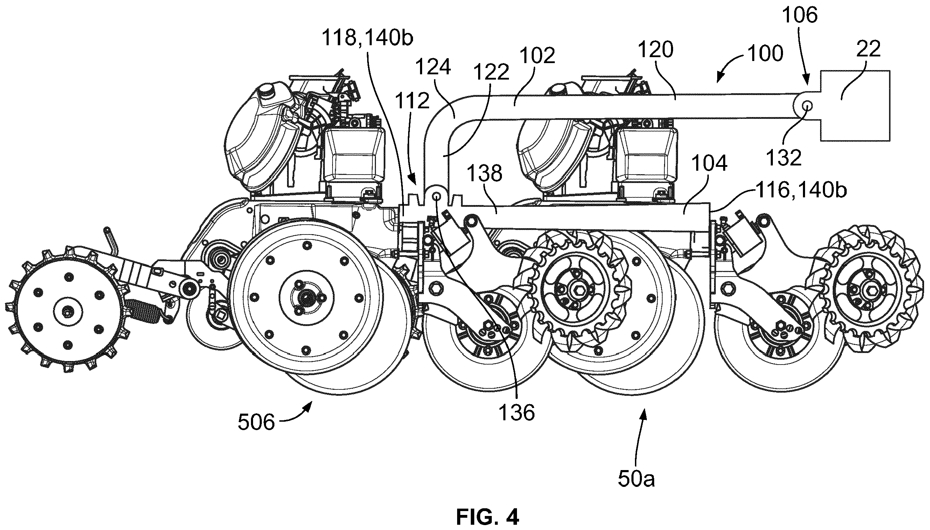

FIGS. 3A and 3B illustrate a first embodiment of a row unit coupling device 100. As seen in at least FIGS. 4-8, the row unit coupling device 100 is configured to couple a pair of row units 50a, 50b to a tool bar 22 in a manner that provides a walking beam arrangement. The coupling device 100 can be constructed from a variety of materials, including, but not limited to metal and/or steel, among other materials and alloys. Further, according to certain embodiments, the coupling device 100 can be constructed, at least in part, from metallic bars or tubing that can have various cross sectional shapes, and/or can be formed via casting.

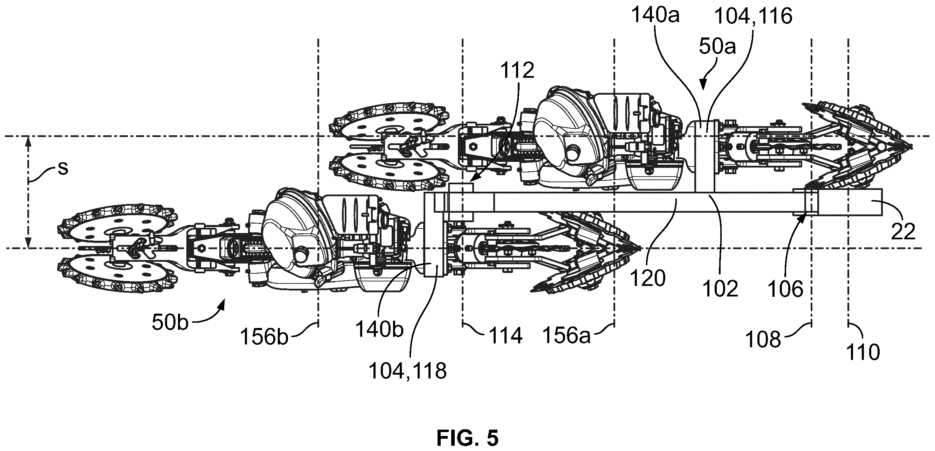

According to the illustrated embodiment, the row unit coupling device 100 incudes a swing arm 102 and a walking beam 104. The swing arm 102 is configured to be pivotally coupled to the tool bar 22 at a first pivot point 106 (FIG. 4) of the coupling device 100 such that the swing arm 102 can be pivotally displaced about a first axis 108 (FIG. 5) at the first pivot point 106. As seen in FIG. 5, according to the illustrated embodiment, the first axis 108 extends in a direction that is generally parallel to a central longitudinal axis 110 of the tool bar 22 that extends along the width of the tool bar 22, and is in a direction that is generally perpendicular to the direction in which the tractor 12 will pull the seeder 10 while planting seed. Further, the first axis 108 may, or may not, be offset from the central axis 110 of the tool bar 22, including in one or both of a horizontal direction and vertical direction.

The walking beam 104 can be pivotally coupled to the swing arm 102 at a second pivot point 112 (FIG. 4) of the coupling device 100. Thus, the walking beam 104 can be pivotally displaceable relative to the swing arm 102, and vice versa, about a second axis 114 at the second pivot point 112. As seen in FIG. 5, the second axis 114 is generally parallel to, and offset from, both the first axis 108 and the central axis 110 of the tool bar 22 in one or both of a horizontal direction and vertical direction.

Pivotal displacement of the swing arm 102 about the first axis 108 of the first pivot point 106 can result in a vertical raising or lowering of at least a portion of the walking beam 104 relative to at least the tool bar 22. Such vertical raising and lowering of the walking beam 104 can result in a raising or lowering of one or both of first and second row units 50a, 50b (FIG. 4-6) that are coupled to the walking beam 104. Similarly, rotation of the walking beam 104 about the second axis 114 of the second pivot point 112 can result in a change in the vertical position of proximal and distal ends 116, 118 of the walking beam 104. Moreover, as the walking beam 104 is pivotally displaced, one of the proximal and distal ends 116, 118 of the walking beam 104, and the row unit 50a, 50b attached to that end 116, 118, will raise in a vertical direction, while the other of the proximal and distal ends 116, 118 of the walking beam 104, and the row unit 50a, 50b attached to that end 116, 118, will be lowered in a vertical direction.

As seen in at least FIGS. 3A and 3B, the swing arm 102 includes a first arm 120 that extends in a first direction, a second arm 122 that extends in second direction, the second direction being different than the first direction. According to certain embodiments, the first direction can be a generally horizontal direction, while the second direction can be a generally vertical direction. Further, according to the illustrated embodiment, the first direction is generally perpendicular to the second direction. Additionally, according to certain embodiments, the swing arm 102 can include an elbow portion 124 that joins the first arm 120 to the second arm 122, and which can provide a transition between the first direction and the second direction.

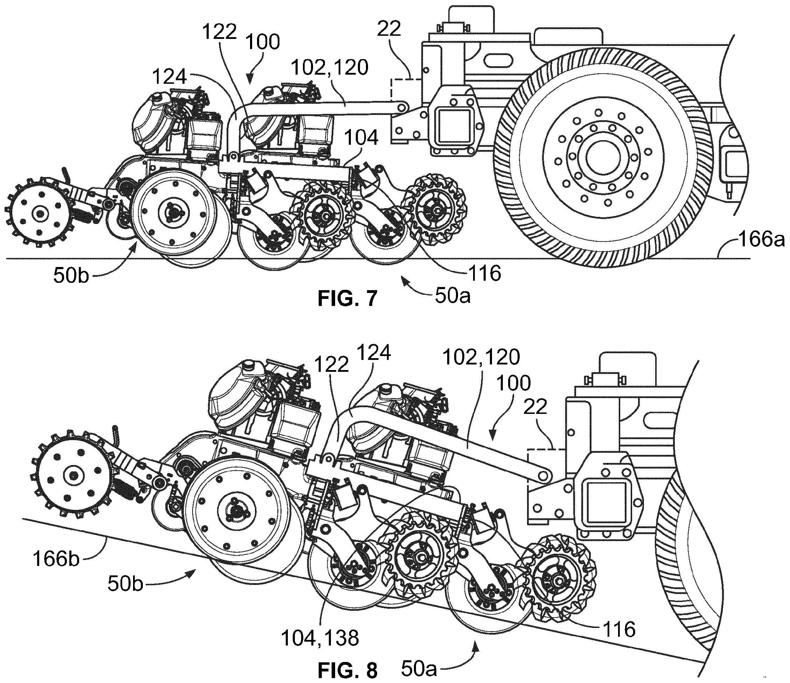

The first arm 120 of the swing arm 102 can extend from a first end 126 of the swing arm 102 to the elbow portion 124 of the swing arm 102. The first end 126 is adapted to couple the row unit coupling device 100 to the tool bar 22. For example, according to certain embodiment, the first end 126 of the first portion of the swing arm 102 includes an aperture 130 that is sized to receive a first pin 132 (FIG. 4) that can pivotally couple, or attach, the first arm 120, and thus the swing arm 102, to the tool bar 22. Such a pivotal connection can provide the previously mentioned first pivot point 106 for the row unit coupling device 100. The length of the first arm 120 between the first end 126 and the elbow portion 124 can be based on a variety of criteria. For example, according to certain embodiments, the first arm 120 can have a length that will separate a first, forward positioned row unit 50a from contacting the tool bar 22 as a vertical position, and/or angular orientation, of the first row unit 50a relative to the tool bar 22 is changed in response to pivotal displacement of at least the row unit coupling device 100 and/or the row units 50a, 50b (FIG. 5). Additionally, or alternatively, according to certain embodiments, the first arm 120 can have a length that can accommodate the first and second row units 50a, 50b being lifted off the ground when the seeder 10 is in a transport mode. For example, according to certain embodiments, the first arm 120 can have a length such that when at least the first arm 120 is rotated about ninety degrees from the position shown in FIG. 7, both the row units 50a, 50b will be lifted off of the adjacent ground surface 166a-c (FIGS. 7-9).

The second arm 122 of the swing arm 102 can extend from the elbow portion 124 to a second end 128 of the swing arm 102. The second arm 122 can include, in relatively close proximity to the second end 128, an aperture 134 that can receive a second pin 136 (FIG. 4) that can pivotally couple the swing arm 102 to the walking beam 104. Such a pivotal connection between the swing arm 102 and the walking beam 104 can provide the row unit coupling device 100 with the second pivot point 112 about which the swing arm 102 and/or the walking beam 104 can be pivotally displaced.

The walking beam 104 has a central beam 138 that extends between a proximal end 116 and a distal end 118 of the walking beam 104. A row adapter 140a, 140b that is configured to secure a row unit 50a, 50b to the row unit coupling device 100 can outwardly extend from each of the opposing proximal and distal ends 116, 118 of the walking beam 104. According to certain embodiments, each row adapter 140a, 140b can extend from the central beam 138 in a direction that is generally perpendicular to the central beam 138, and which is also generally parallel to the tool bar 22 Additionally, as seen in at least FIGS. 3A and 3B, the row adapters 140a, 140b can outwardly extend from the central beam 138 in opposite directions so as to accommodate an partially overlapping side-by-side placement of adjacent row units 50a, 50b when coupled to the row unit coupling device 100, as seen for example in at least FIG. 5.

The row adapters 140a, 140b can each include a connection body 142 and an offset body 144. Each connection body 142 is adapted to secure a row unit 50a, 50b to the row unit coupling device 100. For example, according to certain embodiments, the connection body 142 includes a plurality of through-holes 146 that can accommodate passage of a mechanical faster, such as, for example, a bolt and/or screw, that can mechanically fasten or attach the central frame 52 of a row unit 50a, 50b to the connection body 142. The connection body 142 can also include one or more threaded apertures 148 that can threadingly receive a mechanical faster that can further secure the central frame 52, among other portions, of the row unit 50a, 50b to the row unit coupling device 100.

As seen in at least FIGS. 3A and 3B, according to certain embodiments, the connection body 142 can include an upper portion 150 and a lower portion 152 that are connected via a stem segment 154 of the connection body 142. The stem segment 154 can extend vertically between the upper and lower portions 150, 152, and have a width in a horizontal direction parallel to the second axis 114 that is narrower then at least the lower portion 152. Further, according to the illustrated embodiment, the upper portion 150 can include a plurality of the through-holes 146, while the lower portion 152 can include at least some of the threaded apertures 148. However, the positioning of the through-holes 146 and/or threaded apertures 148 can be dependent, at least in part, on the associated positioning of through-holes and/or threaded apertures in the central frame 52 and/or an associated mounting bracket that may accommodate indirect attachment of the row unit 50a, 50b to a corresponding connection body 142.

The offset body 144 of each row adapter 140a, 140b can be positioned between the central beam 138 and the associated connection body 142. The offset body 144 can have a length between the central beam 138 and the connection body 142 that can accommodate a row unit 50a, 50b being coupled to at least the connection body 142 without, or with minimal, interference from the other row unit 50a, 50b. Further, the length of each offset body 144 can assist with the row unit coupling device 100 being configured to accommodate the widths of the row units 50a, 50b such that at least a portion of the row units 50a, 50b can be in a partial side-by-side or overlapping arrangement while also being able to, if desired, provide minimal spacing between the furrows 18 (as generally indicated by "S" in FIG. 5).

For example, as seen in FIG. 5, the central frames 52 of the row units 50a, 50b that are attached to the row unit coupling device 100 can be offset from each other such the center of gravity and/or the central frame 52 of the first, or proximal, row unit 50a is positioned between the proximal and distal ends 116, 118 of the walking beam 104, and, moreover, located upstream of the connection body 142 at the distal end 118. Further, the center of gravity and/or the central frame 52 of the second, or distal, row unit 50b is positioned downstream of the connection body 142 that is at the distal end 118. Such an overlapping arrangement can result in the central frame 52 of the first, proximate row unit 50a being positioned upstream, and not neighboring, the central frame 52 of the second, distal row unit 50b. Thus, for example, a centerline 156a of the first row unit 50a that is generally parallel to the tool bar 22 can be upstream, and in a horizontal direction, from a similar centerline 156b of the second row unit 50b. Further, according to certain embodiments, the centerlines 156a, 156b of the row units 50a, 50b and/or the centers of gravity of the row units 50a, 50b can be positioned on opposing sides of the second pivot point 112. Additionally, or alternatively, the centers of reaction force for the proximal and distal row units 50a, 50b can be on opposing sides of the second pivot point 112. Such centers of reaction force can, for example, be based, at least in part, on the downward force settings and/or requirements of the associated opener blades 62, row cleaners 58, coulter blades 60, press wheels 68, gage wheels 64, and/or closing wheels 70, among other configurations and/or setting of the row units 50a, 50b. Additionally, one of the proximal and distal row units 50a, 50b can be slightly overbalanced such that that row unit 50a, 50b tends to hang lower than the other row unit 50a, 50b.

As also seen in at least FIGS. 3A and 3B, the central beam 138 can also include a pair of opposing proximal and distal support protrusions 158a, 158b and pair of opposing sidewalls 160a, 160b that can form a cavity 164 that can house at least a portion of the second end 128 of the swing arm 102. According to certain embodiments, the proximal and distal support protrusions 158a, 158b can extend from an top surface 162 of the central beam 138 and have generally curve shaped inner surfaces, among other configurations, that can accommodate rotation of the second end 128 of the swing arm 102 as the swing arm 102 and/or the walking beam 104 are rotated about the second pivot point 112. The sidewalls 160a, 160b can each include an aperture 166 that can receive insertion of the second pin 136, and can be positioned to maintain a relative alignment of the swing arm 102 and the walking beam 104 during at least pivotal displacement about the second pivot point 112.

FIGS. 7-9 illustrate exemplary orientations of the row unit coupling device 100 in response to changes in the profile of the adjacent ground surface(s) 166a-c along which one or each of the row units 50a, 50b, seeder 10, and/or tractor 12 are traveling. As seen in FIG. 7, while traveling along a relatively flat, horizontal ground surface 166a, the tool bar 22 is at a vertical orientation or position that is generally perpendicular to the adjacent ground surface 166a. Further, in this scenario, both the swing arm 102 and walking beam 104 are at generally neutral positions wherein the first arm 120 of the swing arm 102 and the central beam 138 of the walking beam 104 are generally parallel to each other and/or to the ground surface 166a. In such an orientation, the row units 50a, 50b are also positioned to plant seed into the ground in a direction that is generally perpendicular to the adjacent ground surface 166a, which may thereby assist in the seed being planted at a selected depth.

In FIG. 8, the first and second row units 50a, 50b are traveling along a decline or downwardly sloped ground surface 166b. As seen, in such a situation, the positioning of the row units 50a, 50b on the sloped ground surface 166b can facilitate the swing arm 102 being pivotally displaced in a first, clockwise rotation direction such that the swing arm 102 is generally raised in an upward direction about the first pivot point 106, including relative to the tool bar 22. Further, in the illustrated example, the elbow portion 124 of the swing arm 102, and thus at least the portion of the first arm 122 that is adjacent to the elbow portion 124, has thus been raised to a vertical height that is higher than a vertical height of the first end 126 of the swing arm 102. Such pivotal displacement of the swing arm 102 can also coincide with, or facilitate, a vertical raising of the walking beam 104 at least at the location at or around the second pivot point 112, and at least relative to the tool bar 22 and/or first pivot point 106.

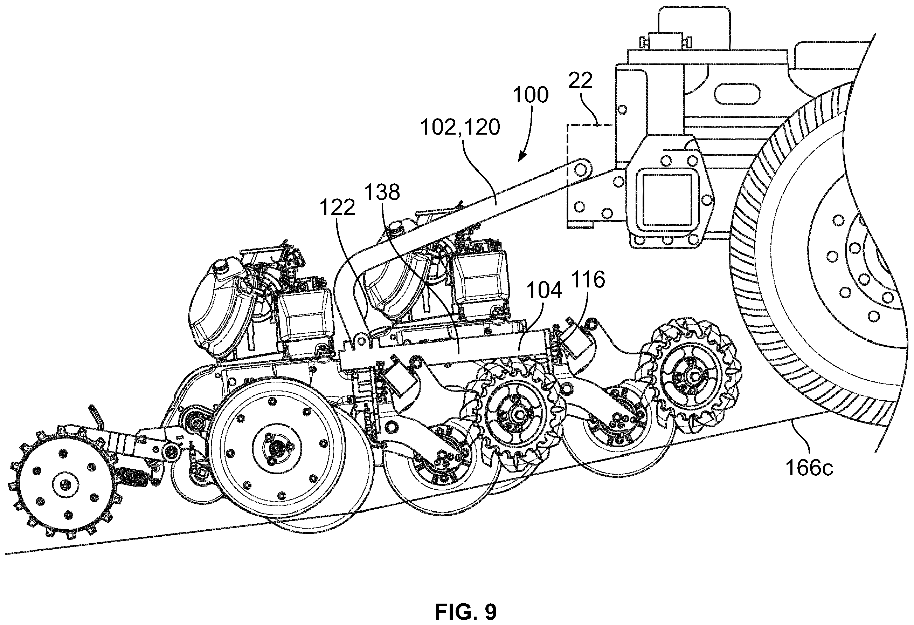

Additionally, in the example depicted in FIG. 8, the walking beam 104 is also pivoted in the first, clockwise rotational direction such that the proximal end 116 of the walking beam 104 is lowered in a vertical direction, while the opposing distal end 118 of the walking beam 104 is raised in a vertical direction, about the second pivot point 112. Such displacement of the walking beam 104 in the first, clockwise rotational direction can result in similar rotational displacement of the attached first and second row units 50a, 50b in the first rotational direction. With respect to at least the neutral position shown in FIG. 7, as seen in FIG. 8, such rotational displacement about the first and second pivot points 106, 112 can result a distance between the first end 126 of the swing arm 102 and the proximal end 116 of the walking beam 104 decreasing, as well as the distal end 118 of the walking beam 104 raising to a vertical height that is higher than at least the proximal end 116 of the walking beam 104. By at least the row unit coupling device 100 being pivotal about the first and second pivot points 106, 112, the first and second row units 50a, 50b are capable of being raised/lowered and/or have changes in angular orientations relative to at least the tool bar 22 in manners that can accommodate changes in the profile or orientation of the ground surface 166b. Such changes can generally accommodate the row units 50a, 50b being oriented/positioned to plant seed in a direction that is generally perpendicular to the adjacent downwardly sloped ground surface 166b, and thereby generally continue seed planting seed at a selected depth. Further, such adjustments in the angular orientations of the row units 50a, 50b via use of the row unit coupling device 100 can occur while other row units of the seeder 10 that are coupled to other row unit coupling devices 100 are traveling along a flat, horizontal ground surface 166a, or ground surfaces having other orientations, such as, for example, the ground surfaces discussed below with respect to FIG. 9.

In FIG. 9, the first and second row units 50a, 50b are traveling along an incline or upward sloped ground surface 166c. As seen, in such a situation, the first and second row units 50a, 50b encountering such a ground surface 166c can facilitate the swing arm 102 being pivotally displaced in a second, counterclockwise rotation direction that is opposite of the first rotational direction such that the swing arm 102 is generally lowered about the first pivot point 106, including relative to the tool bar 22. Further, in the illustrated example the elbow portion 124, and thus adjacent portion of the first arm 120, of the swing arm 102 are lowered to vertical heights that are lower than a vertical height of the first end 126 of the swing arm 102. Such pivotal displacement of the swing arm 102 can also lower the walking beam 104 at least at the location at or around the second pivot point 112, and at least relative to the tool bar 22 and/or first pivot point 106.

Further, in the example depicted in FIG. 9, the walking beam 104 is also pivoted in the second, counterclockwise rotational direction such that the proximal end 116 of the walking beam 104 is raised in a vertical direction, while the opposing distal end 118 of the walking beam 104 is lowered in a vertical direction, about the second pivot point 112. Such displacement of the walking beam 104 in the second, counterclockwise rotational direction can result in similar rotational displacement of the attached first and second row units 50a, 50b in the second rotational direction. With respect to at least the neutral position shown in FIG. 7, as seen in FIG. 9, such rotational displacement about the first and second pivot points 106, 112 can also result a distance between the first end 126 of the swing arm 102 and the proximal end 116 of the walking beam 104 increasing, as well as the distal end 118 of the walking beam 104 raising to a vertical height that is lower than at least the proximal end 116 of the walking beam 104. However, regardless of the direction or extent of displacement about the first and second pivot points 106, 112, as with FIG. 8, the adjustments in the angular orientations of the row units 50a, 50b achieved via use of the row unit coupling devices 100, as seen in FIG. 9, allows for the row units 50a, 50b to be oriented/positioned to plant seed into the ground in a direction that is generally perpendicular to the adjacent ground surface 166c, which may thereby assist in the seed being planted at a selected depth.

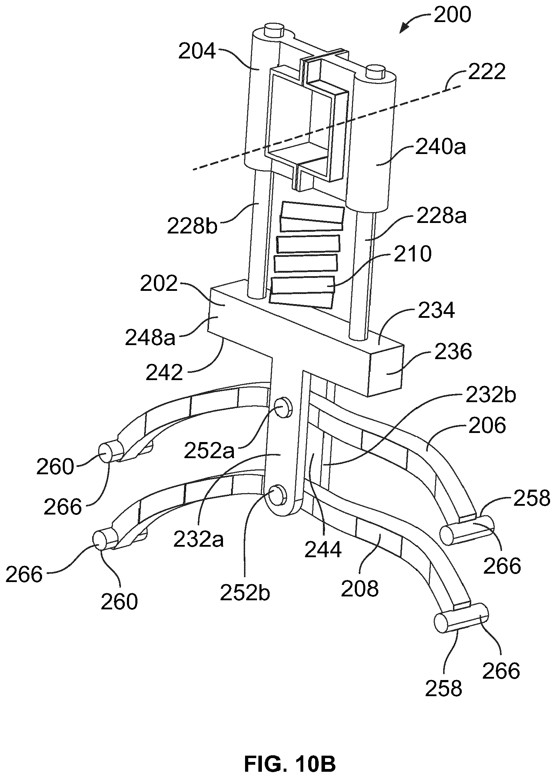

FIGS. 10A and 10B illustrate a second embodiment of a row unit coupling device 200. As seen in at least FIGS. 11-18, the row unit coupling device 200 is configured to couple a pair of row units 50a, 50b to a tool bar 22 in a manner that provides a first parallelogram linkage arrangement. The coupling device 200 can be constructed from a variety of materials, including, but not limited to metal and/or steel, among other materials and alloys. Further, according to certain embodiments, the coupling device 200 can be constructed, at least in part, from metallic bars or tubing that can have various cross sectional shapes, and/or can be formed via casting.

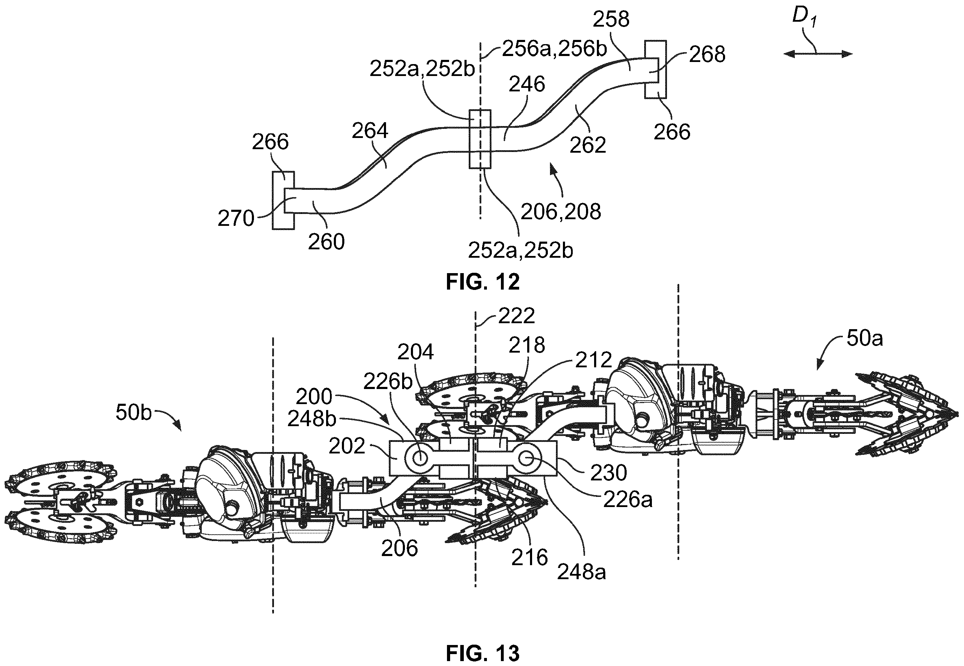

According to the illustrated embodiment, the row unit coupling device 200 includes a midarm or base unit 202, a mount body 204, an upper arm 206, a lower arm 208, and a biasing element 210, such as, for example, a spring, among other biasing elements. The mount body 204 is adapted to be securely connected to the tool bar 22. The mount body 204 can include a top wall 212, a bottom wall 214, a front wall 216, and a rear wall 218 (FIG. 13). According to the illustrated embodiment, the mount body 204 includes an orifice 220 that extends through the front and rear walls 216, 218 that can receive placement of the tool bar 22. The orifice 220 can further extend along a centerline 222 that is generally parallel to the centerline of at least the portion of the tool bar 22 that extends through the orifice 220. The mount body 204 can also comprise two sections or halves 224a, 224b that can each be placed about the tool bar 22, and that can be joined together, such as, for example, via one or more mechanical fasteners, so as to secure the mount body 204 about the tool bar 22. As also seen in at least FIG. 10A, the mount body 204 can include a pair of apertures 226a, 226b that extend through the top and bottom walls 212, 214 of the mount body 204 that are each adapted to receive the slideable displacement of a guide arm 228a, 228b of the base unit 202. According to the illustrated embodiments, the apertures 226a, 226b are generally parallel to each other, and positioned on opposing sides of the mount body 204, as well as on opposing sides of the orifice 220. Displacement of the guide arms 228a, 228b within the apertures 226a, 226b can at least assist in guiding vertical displacement of at least the base unit 202 and the upper and lower arms 206, 208.

In addition to the guide arms 228a, 228b, the base unit 202 can further include a central beam 230 and a leg segment 232. According to the illustrated embodiment, the guide arms 228a, 228b upwardly extend from the central beam 230, such as, for example, from an upper wall 234 of the central beam 230. Additionally, the central beam 230 can extend between a first end 236 and a second end 238 in a direction that is generally perpendicular to the centerline 222 of the orifice 220 of the mount body 204 and to the upwardly extending direction of the guide arms 228a, 228b. According to certain embodiments, the length of the central beam 230 at least along the upper wall 234 is greater than a corresponding width between opposing sides 240a, 240b of the mount body 204. The central beam 230 also has a thickness between the upper wall 234 and an opposing lower wall 242 of the central beam 230 so as to at least assist in preventing and/or minimizing the deflection, deformation, and/or bending of the central beam 230 that may be attributed to the biasing element 210 exerting at least a downward force against the central beam 230 and/or forces associated with direct or indirect coupling between the central beam 230 and the row units 50a, 50b.

The leg segment 232 comprises a first leg segment 232a and a second leg segment 232b that are spaced apart to provide a cavity 244 therebetween that can accommodate displaceable placement of at least a central segment 246 of each of the upper and lower arms 206, 208. As seen in at least FIGS. 10A and 10B, the first and second leg segments 232a, 232b can downwardly extend from the central beam 230 in a direction that is generally opposite, and can be parallel, to the upwardly direction in which the guide arms 228a, 228b extend from the central beam 230. Additionally, according to the illustrated embodiment, the first and second leg segments 232a, 232b can extend from opposing sidewalls 248a, 248b (FIG. 13) of the central beam 230 and/or from the lower wall 242 of the central beam 230. The first and second leg segments 232a, 232b can also each include upper and lower apertures 250a, 250b that are positioned and sized to receive placement of an associated upper and lower pin 252a, 252b, respectively.

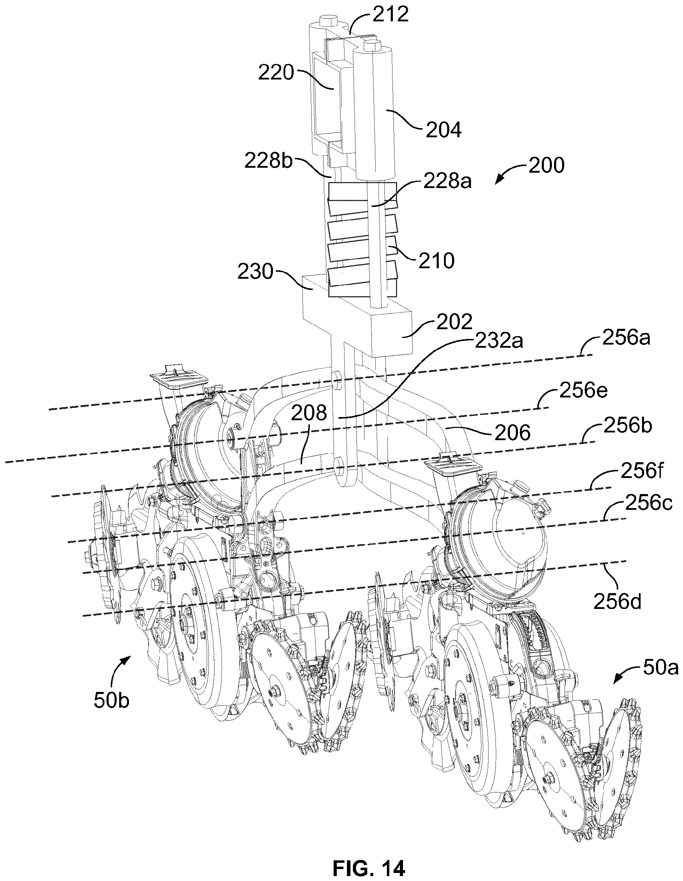

As seen in at least FIG. 10B, the upper and lower arms 206, 208 can each be pivotally secured to the first and second leg segments 232a, 232b via the associated upper pin 252a and lower pin 252b, respectively. According to certain embodiments, as seen in at least FIG. 10A, the upper and lower pins 252a, 252b can be an integral portion of the upper and lower arms 206, 208, and can extend from opposing sides of the central segment 246 of the associated upper or lower arm 206, 208. Alternatively, the upper and lower arms 206, 208 can each include an aperture in the central segment 246 that is sized to receive placement of the associated upper or lower pin 252a, 252b. Further, according to certain embodiments, the upper and lower pin 252a, 252b can be secured to either the upper and lower apertures 250a, 250b of the associated first and second leg segments 232a, 232b or the upper and lower arms 206, 208 via a press or friction fit or a keyed connection, among other connections. Referencing FIGS. 11 and 14, according to the illustrated embodiment, the upper pin 252a provides a first pivot point 254a about which the upper arm 206 can be pivotally displaced along a first pivot axis 256a relative to the base unit 202, or vice versa, and the lower pin 252b provides a second pivot point 254b about which the lower arm 208 can be pivotally displaced along a second pivot axis 256b relative to the base unit, or vice versa. The first and second pivot axes 256a, 256b can be generally parallel to, and offset from, each other. Additionally, according to certain embodiments, first and second pivot axes 256a, 256b can also be generally parallel to, and offset from, the centerline 222 of the orifice 220 of the mount body 204. Referencing FIGS. 10A, 10B, and 12, in addition to the central segment 246, the upper and lower arms 206, 208 can also each include a proximal segment 258 and a distal segment 260. As seen in at least FIG. 12, which illustrates a top view of either the upper arm 206 or lower arm 208, the proximal and distal segments 258, 260 are located at opposite ends of the upper and lower arms 206, 208. Additionally, as seen in FIG. 12, the proximal and distal segments 258, 260 can both extend away from the central segment 246 in at least a first direction (as generally indicated by "*D₁*"), such as, for example a direction perpendicular to both the first and second pivot axes 256a, 256b and the direction the guide arms 228a, 228b upwardly extend from the central beam 230. Additionally, as seen in at least FIG. 10A, at least the proximal and distal segments 258, 260 can have a downwardly inclined, sloped, and/or curved configuration. Thus, according to certain embodiments, at the angular orientations shown in at least FIGS. 10A and 10B, the upper and lower arms 206, 208, can have a generally downwardly curved shape.

The proximal and distal segments 258, 260 can also be offset from the central segment 246, as well as from each other. For example, as seen in at least FIG. 12, the proximal and distal segments 258, 260 can be located on opposing sides of the central segment 246. Such offsetting of the proximal and distal segments 258, 260 can be provided at least by a first offset segment 262 that extends between the central segment 246 and the proximal segment 258, and a second offset segment 264 that extends between the central segment 246 and the distal segment 260. In addition to downwardly extending from opposing ends of the central segment 246, the first and second offset segments 262, 264 can extend in opposing outwardly directions. For example, referencing at least FIGS. 12 and 13, one of the first and second offset segments 262, 264 can outwardly extend in a generally right side direction relative to the sidewalls 248a, 248b of the central segment 246, and the other of the first and second offset segments 262, 264 can outwardly extend in an opposing, generally left side direction. The degree or extent to which the first and second offset segments 262, 264 extend in opposing outwardly directions relative to at least the central segment 246 can be based, at least in part, on the widths of the row units 50a, 50b that will be coupled to the upper and lower arms 206, 208. Moreover, as seen in at least FIG. 13, at least the first and second offset segments 262, 264 can be configured to accommodate at least a partially overlapping or offset side-by-side arrangement of the row units 50a, 50b that are attached to the upper and lower arms 206, 208 in a manner that can also minimize the distance between furrows 18 formed by the row units 50a, 50b, and thus minimize crop row spacing. Thus, as seen in at least FIGS. 11, 13, and 14, according to such a partially overlapping or offset arrangement, at least a portion of the first, proximate row unit 50a is positioned upstream of, or positioned at a more forward location relative to the direction the seeder 10 will travel while performing a seeding operation, than the second, distal row unit 50b.

Each of the proximal and distal segments 258, 260 are configured to be pivotally secured to a row unit 50a, 50b. For example, referencing FIGS. 10A and 10B, the ends of each of the upper and lower arms 206, 208 can include a row unit pin 266 that can be received in a mating aperture in an associated row unit 50a, 50b, and/or a mounting plate or bracket that is secured to the row unit 50a, 50b. Alternatively, the opposing ends of the upper and lower arms 206, 208 can each include an aperture that can accommodate receipt of a mating row unit pin 266 that is part of, or otherwise coupled to or received by, the associated row unit 50a, 50b, and/or an associated mounting plate or bracket that is secured to the row unit 50a, 50b. As seen in at least FIG. 14, with such pivotal connections, the proximal ends 268 of the upper and lower arms 206, 208 can be pivotally displaced about third and fourth pivot axes 256c, 256d, respectively, relative to the first row unit 50a, or vice versa, and the distal ends 270 of the upper and lower arms 206, 208 can be pivotally displaced about fifth and sixth pivot axes 256e, 256f, respectively, relative to the second row unit 50b, or vice versa

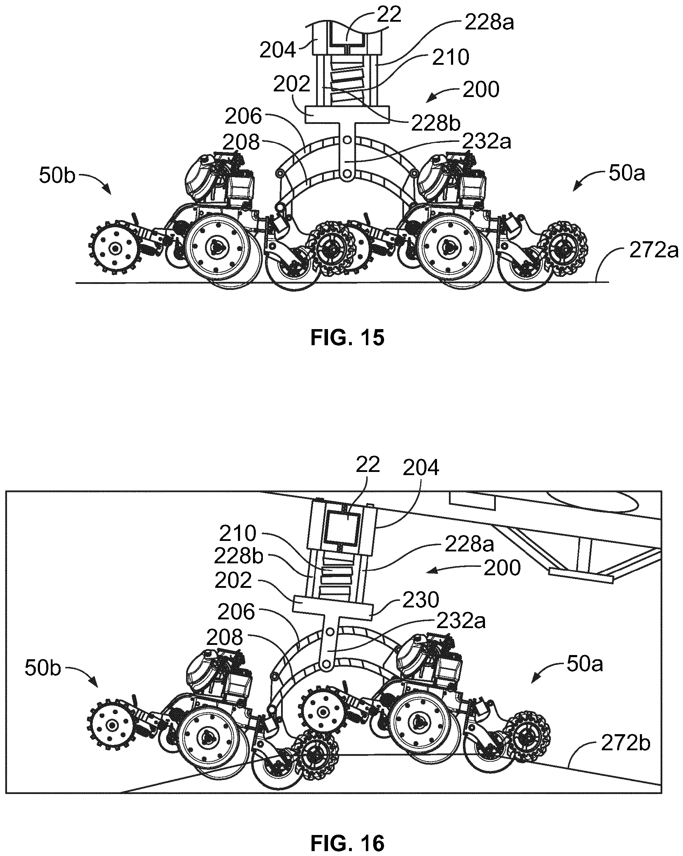

The biasing element 210 can be positioned to provide a downward force against at least the base unit 202. For example, according to the illustrated embodiments, the biasing element 210 can be positioned between, or coupled to, the mount body 204 and the base unit 202, such that the biasing element 210 provides a biasing force that seeks to displace the base unit 202 in a direction generally toward ground surface. Such a downward force by the biasing element 210 and also assist in the row units 50a, 50b cutting a furrow 18, and/or planting seed in the furrow, at a predetermined selected depth. In the event the biasing force is overcome, such as, for example, by a load force, the biasing element 210 can be compressed, which can be associated with a generally upward displacement of at least the guide arms 228a, 228b within the apertures 226a, 226b of the mount body 204 as at least the central beam 230 of the base unit 202 is moved into closer proximity to the mount body 204, or vice versa. Upon removal of the load force, and/or the load force being insufficient to overcome the biasing force of the biasing element 210, the base unit 202 can be generally downwardly displaced relative to the mount body 204 so that the distance between the central beam 230 and the mount body 204 increases. Such generally downward displacement can also be accompanied with the guide arms 228a, 228b of the base unit 202 being displaced in a generally downward direction within the apertures 226a, 226b of the mount body 204. FIG. 15 illustrates an example in which the row unit coupling device 200 is secured to a tool bar 22. In the illustrated example, the tool bar 22 is secured within the orifice 220 of the mount body 204. Also, in the illustrated scenario, the adjacent ground surface 272a upon which the row units 50a, 50b are traveling is relatively flat, and the row unit coupling device 200 is thus at a generally neutral position. In such a neutral position, the mount body 204 and base unit 202 can extend from the tool bar 22 in a downward direction that is generally perpendicular to the ground surface 272a, the proximal and distal ends 268, 270 of the lower arm 208 are generally at the same vertical height, the proximal and distal ends 268, 270 of the upper arm 206 are generally at the same vertical height, and the biasing element 210 is generally at an partially compressed, state. Accordingly, the row units 50a, 50b that are coupled to the row unit coupling device 200 are generally at the same vertical height. In such an orientation, the row units 50a, 50b are positioned to plant seed into the ground in a direction that is generally perpendicular to the adjacent ground surface 272a, which may thereby assist in the seed being planted at a selected depth.

Unlike FIG. 15, in FIG. 16, the row units 50a, 50b that are coupled to the row unit coupling device 200 are at a higher elevation along a portion of the ground surface 272b than the wheels that support the seeder 10, which are instead at a lower elevation. In such a scenario, as seen in FIG. 15, the positioning of the row units 50a, 50b on the ground surface 272b relative to the tool bar 22 has facilitated the mount body 204 and base unit 202 to extend from the tool bar 22 in a downward direction that is non-perpendicular to the ground surface. However, the parallelogram linkages provided by the row unit coupling device 200 can accommodate such changes in the orientation or profile of the ground surface 272b by allowing, for example, for changes in the angular orientations of the row units 50a, 50b, at least relative to the neutral orientation shown in FIG. 15. Such changes can accommodate the row units 50a, 50b to continue to be positioned to plant seed into the ground in a direction that is generally perpendicular to the adjacent ground surface 272b, which, again, may again assist in the seed being planted at a selected depth.

For example, in comparison to the ground surface 272a shown in FIG. 15, the change in the orientation of the ground surface 272b, as well as the orientation and distance between the ground surface 272b and the tool bar 22, as depicted in FIG. 16, has resulted in a reduction in the load force transmitted to at least the biasing element 210 from the ground surface 272b. As a result, the biasing element 210 has further uncompressed, or expanded, such that the central beam 230 of the base unit 202 has been moved in a generally downward direction away from the mount body 204. As discussed above, such generally downward displacement of the base unit 202 can be guided at least in part by the sliding displacement of the guide arms 228a, 228b along the apertures 226a, 226b of the mount body 204. Further, the upper and lower arms 206, 208 have been rotate relative to at least the leg segment 232 of the base unit 202 in the second, counterclockwise rotational direction about the first and second pivot axes 256a, 256b such that at least the vertical height of the first row unit 50a can be raised, and/or the vertical height of the second row unit 50b has been generally lowered. The angular orientation of the first and/or second row units 50a, 50b can also be adjusted via rotational displacement of the upper and lower arms 206, 208 about the first and second pivot axes 256a, 256b. Further, in response to rotational displacement of the upper and lower arms 206, 208, the angular orientation of the first and/or second row units 50a, 50b relative to the associated proximal and distal ends 268, 270 of the upper and lower arms 206, 208 can be adjusted via relative pivotal displacement about the associated third, fourth, fifth, and sixth pivot axes 256c-f. Thus, as seen in FIG. 16, with such adjustments to the angular orientations of the row units 50a, 50b, the row units 50a, 50b are positioned to plant seed a direction that is generally perpendicular to the adjacent ground surface 272b.

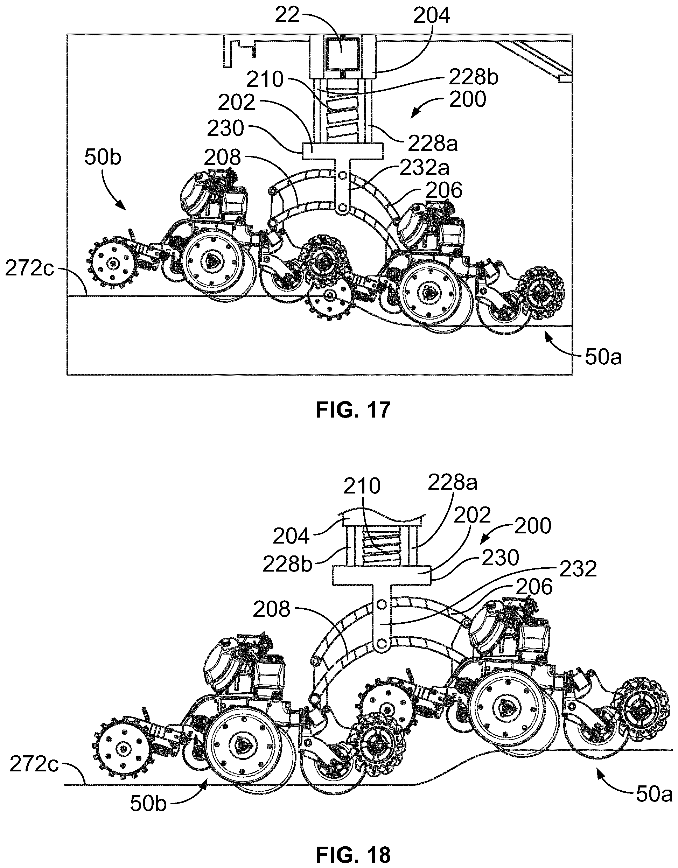

FIGS. 17 and 18 illustrate examples wherein one of the first and second row units 50a, 50b is at a lower elevation than the other row unit 50a, 50b, but the tool bar 22 is maintained at an orientation that is generally perpendicular to the ground surface 272c. As seen by the example in FIG. 17 in which the first row unit 50a is at a lower vertical height than the second row unit 50b, the biasing element 210 has expanded to accommodate the lower location of the first row unit 50a. Conversely, in FIG. 18 in which the first row unit 50a is at a higher vertical height than the second row unit 50b, the biasing element 210 has compressed to accommodate the higher vertical location of the first row unit 50a. In both of the scenarios presented in FIGS. 17 and 18, the changes in the compressive state of the biasing element 210 has been accompanied by a displacement of the base unit 202 relative to the mount body 204, which, again, is guided by displacement of the guide arms 228a, 228b of the base unit 202 through the apertures of the mount body 204. Further, to accommodate the differences in vertical positions, the upper and lower arms 206, 208 have been rotated to different extents relative to the leg segment 232 about the first and second pivot axis 256a, 256b. Such changes in the angular orientations of the upper and lower arms 206, 208 can also coincide with changes in the angular orientation of the proximal ends 268 of the upper and lower arms 206, 208 relative to the first row unit 50a, which can be facilitated by rotational displacement of the upper and lower arms 206, 208 relative to the first row unit 50a about the third and fourth pivot axes 256c, 256d. Similarly, changes in the angular orientation of the upper and lower arms 206, 208 can also coincide with changes in the angular orientation of the distal ends 270 of the upper and lower arms 206, 208 relative to the second row unit 50b, which can be facilitated by rotational displacement of the upper and lower arms 206, 208 relative to the second row unit 50b about the fifth and sixth pivot axes 256e, 256f. However, again, despite at least temporary changes in at least the vertical positions of first and second row units 50a, 50b, among other positional or angular changes, the row unit coupling device 200 can at least assist in maintaining the row units 50a, 50b at positions and/or angular orientations at which the row units 50a, 50b can continue to plant seed a direction that is generally perpendicular to the adjacent ground surface 272c.

FIGS. 19A and 19B illustrate a third embodiment of a row unit coupling device 300. As seen in at least FIGS. 20-26, the row unit coupling device 300 is configured to couple a pair of row units 50a, 50b to a tool bar 22 in a manner that provides a second parallelogram linkage arrangement. The coupling device 300 can be constructed from a variety of materials, including, but not limited to metal and/or steel, among other materials and alloys. Further, according to certain embodiments, the coupling device 300 can be constructed, at least in part, from metallic bars or tubing that can have various cross sectional shapes, and/or can be formed via casting.

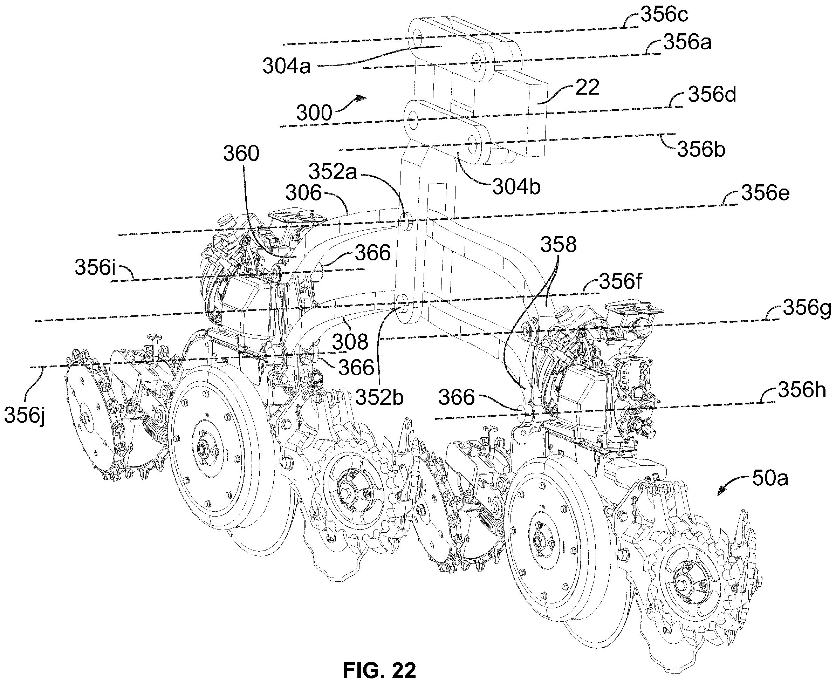

According to the illustrated embodiment, the row unit coupling device 300 includes a midarm or base unit 302, one or more main linkages 304, an upper arm 306, and a lower arm 308. According to certain embodiments, the upper and lower arms 306, 308 can have a configuration similar to that discussed above with respect to the upper and lower arms 206, 208 of the row unit coupling device 200, and which are depicted in FIGS. 10A-18. According to the illustrated embodiment, the one or more parallel main linkages 304a, 304b comprises an upper main linkage 304a and a lower main linkage 304b. According to certain embodiments, the upper and lower main linkages 304a, 304b can be parallel to each other. Additionally the upper and lower main linkages 304a, 304b can each comprise a first linkage segment 312a and a second linkage segment 312b that provide a cavity 314 therebetween that is sized to receive at least a portion of the tool bar 22 and base unit 302, as seen, for example, in FIGS. 19A, 19B, 21 and 22. Further, a first end 310a of the upper and lower main linkages 304a, 304b is adapted to be securely, and pivotally, coupled to the tool bar 22, while an opposing second end 310b is adapted to be securely, and pivotally, coupled to the base unit 302. For example, the first end 310a of both upper and lower main linkages 304a, 304b, and moreover the first end 310a of each of the first and second linkage segments 312a, 312b of the upper and lower main linkages 304a, 304b, can include first upper and lower apertures 316a, 316b, respectively, that can receive first upper and lower pins 318a, 318b (FIG. 20), respectively. As discussed below, the first upper pin 318a can provide a first pivot point 354a (FIG. 20) that accommodate pivotal displacement of the upper main linkage 304a relative to the tool bar 22 about a first pivot axis 356a (FIG. 22). Similarly, the first lower pin 318b can provide a second pivot point 354b (FIG. 20) that accommodate pivotal di splacement of the lower main linkage 304b relative to the tool bar 22 about a second pivot axis 356b (FIG. 22). According to certain embodiments, the first and second pivot axes 356a, 356b can be parallel to, and offset from, each other.

The second end 310b of both the upper and lower main linkages 304a, 304b, and moreover the second end 310b of each of the first and second linkage segments 312a, 312b of the upper and lower main linkages 304a, 304b, can include second upper and lower apertures 320a, 320b, respectively, that can receive a second upper and lower pins 322a, 22b (FIG. 20), respectively. As discussed below, the second upper pin 322a can provide a third pivot point 354c (FIG. 20) that can accommodate pivotal displacement of the upper main linkage 304a relative to the base unit 302 about a third pivot axis 356c (FIG. 22). Similarly, the second lower pin 322b can provide a fourth pivot point 354d (FIG. 20) that can accommodate pivotal displacement of the lower main linkage 304b relative to the base unit 302 about a fourth pivot axis 356d (FIG. 22). According to certain embodiments, the third and second pivot axes 356c, 356d can be parallel to, and offset from, each other, as well as parallel and offset from the first and second pivot axes 356a, 356b.

The base unit 302 include an upper portion 324 and a lower portion 326. According to the illustrated embodiment, the upper portion 324 is configured to be pivotally coupled to the second ends 310a, 310b of the upper and lower main linkages 304a, 304b. Moreover, as seen in at least FIG. 19B, the upper portion 324 is sized to be at least partially received in the cavities 314 provided by the first and second segments 312a, 312b of the upper and lower main linkages 304a, 304b. Such receipt of at least a portion of the upper portion 324 of the base unit 302 in the cavity 314 can facilitate alignment of a first upper aperture 328a of the upper portion 324 with the second upper aperture 320a of the upper main linkage 304a. Such alignment can accommodate insertion of the second upper pin 322a through both the second upper apertures 320a of the first and second segments 312a, 312b of the upper main linkage 304a, and the first upper aperture 328a of the upper portion 324 of the base unit 302 so as to provide a third pivot point 354c (FIG. 20) for the row unit coupling device 300. The third pivot point 354c can accommodate rotational displacement of the second end 310a of the upper main linkage 304a relative to the upper portion 324 about a third pivot axis 356c (FIG. 22).

Similarly, receipt of at least a portion of the upper portion 324 of the base unit 302 in the cavity 314 of the lower main linkage 304b can also facilitate alignment of a second upper aperture 328b of the upper portion 324 of the base unit 302 with the second lower aperture 320b of the lower main linkage 304b, and moreover of the first and second segments 312a, 312b of the lower main linkage 304b. With the apertures 320b, 328b aligned, the second lower pin 322b can be inserted through both the second lower upper apertures 320b of the first and second segments 312a, 312b of the lower main linkage 304b, and the second upper aperture 328b of the upper portion 324 of the base unit 302 so as to provide a fourth pivot point 354d (FIG. 20) for the row unit coupling device 300. The fourth pivot point 354d can accommodate rotational displacement of the second end 310a of the lower main linkage 304a relative to the upper portion 324 about a fourth pivot axis 356d (FIG. 22). According to the illustrated embodiment, the first, second, third, and fourth pivot axes 356a-d can be parallel to, and offset from each other.

The lower portion 326 of the base unit 302 can comprise a first leg segment 332a and a second leg segment 332b that are spaced apart to provide a base cavity 344 therebetween that can accommodate displaceable placement of at least a central segment 346 of each of the upper and lower arms 306, 308. As seen in at least FIGS. 19A and 19B, the first and second leg segments 332a, 332b can downwardly extend from the upper portion 324 of the base unit 302. The first and second leg segments 332a, 332b can also each include upper and lower leg apertures 350a, 350b that are positioned and sized to receive placement of an associated upper and lower leg pin 352a, 352b, respectively, that can pivotally couple the upper and lower arms 306, 308 to the leg segments 332a, 332b.

According to certain embodiments, as seen in at least FIG. 19A, the upper and lower leg pins 352a, 352b can be an integral portion of the upper and lower arms 306, 308, and can extend from opposing sides of the central segment 346 of the associated upper or lower arm 306, 308. Alternatively, the upper and lower arms 306, 308 can each include an aperture in the central segment 346 that is sized to receive placement of the associated upper or lower leg pins 352a, 352b. Further, according to certain embodiments, the upper and lower leg pins 352a, 352b can be secured to either the upper and lower leg apertures 350a, 350b of the associated first and second leg segments 332a, 332b, or the upper and lower arms 306, 308, via a press, friction fit, or a keyed connection, among other connections. Referencing FIGS. 20 and 22, according to the illustrated embodiment, the upper leg pin 352a provides a fifth pivot point 354e about which the upper arm 306 can be pivotally displaced along a fifth pivot axis 356e relative to the base unit 302, or vice versa, and the lower leg pin 352b provides a sixth pivot point 354f about which the lower arm 308 can be pivotally displaced along a sixth pivot axis 356f relative to the base unit 302, or vice versa. The fifth and sixth pivot axes 356e, 356f can be generally parallel to, and offset from, each other, as well as parallel and offset from the other pivot axes 356a-d.

Referencing FIGS. 19A and 19B, in addition to the central segment 346, the upper and lower arms 306, 308 can also each include a proximal segment 358 and a distal segment 360. The proximal and distal segments 358, 360 can be located at opposite ends of the upper and lower arms 306, 308. Further, similar to the proximal and distal segments 258, 260 of the upper and lower arms 206, 208 shown above in at least FIG. 12, the proximal and distal segments 358, 360 of the upper and lower arms 306, 308 can both similarly extend away from the central segment 346 in at least the first direction (as generally indicated by "*D₁*" shown in FIG. 12), such as, for example a direction perpendicular to both the fifth and sixth pivot axes 356e, 356f and the direction in which the upper portion 324 and lower portion 326 of the base unit 302 extend away from each other. Additionally, as seen in at least FIG. 19A, at least the proximal and distal segments 358, 360 can have a downwardly inclined, sloped, and/or curved configuration. Thus, according to certain embodiments, at the angular orientations shown in at least FIGS. 19A and 19B, the upper and lower arms 306, 308, can have a generally downwardly curved shape.

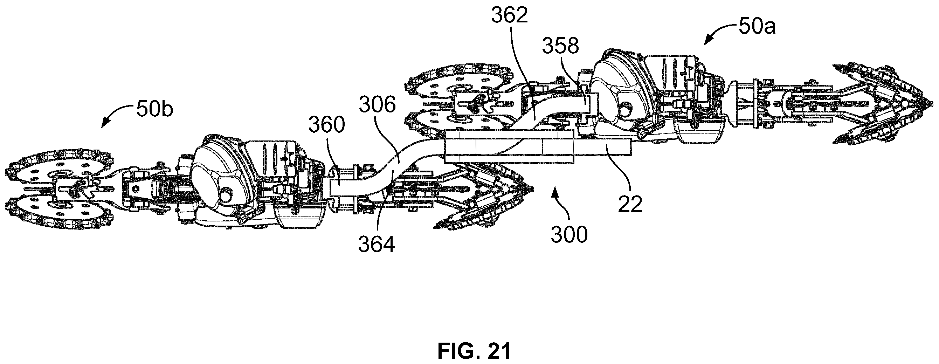

The proximal and distal segments 358, 360 can also be offset from the central segment 346, as well as from each other. For example, as seen in at least FIG. 21, and as similarly illustrated in FIG. 12 with respect to the similar configurations of the upper and lower arms 206, 208, the proximal and distal segments 358, 360 of the upper and lower arms 306, 308 can be located on opposing sides of the central segment 346. Such offsetting of the proximal and distal segments 358, 360 can be provided at least by a first offset segment 362 that extends between the central segment 346 and the proximal segment 358, and a second offset segment 364 that extends between the central segment 346 and the distal segment 360. In addition to downwardly extending from opposing ends of the central segment 346, the first and second offset segments 362, 364 can extend in opposing outwardly directions. For example, similar to the first and second offset segments 262, 264 of the upper and lower arms 206, 208 shown in at least FIG. 12, one of the first and second offset segments 362, 364 can outwardly extend in a generally right side direction relative to the sidewalls 348a, 348b of the central segment 346, and the other of the first and second offset segments 362, 364 outwardly extend in an, opposing, generally left side direction.

The degree or extent to which the first and second offset segments 362, 364 extend in opposing outwardly directions relative to at least the central segment 346 can be based, at least in part, on the widths of the row units 50a, 50b that will be coupled to the upper and lower arms 306, 308. Moreover, as seen in at least FIG. 21, at least the first and second offset segments 362, 364 can be configured to accommodate at least a partially overlapping or offset arrangement of the row units 50a, 50b that are attached to the upper and lower arms 306, 308 in a manner that can also minimize the distance between furrows 18 formed by the row units 50a, 50b, and thus minimize crop row spacing. Thus, as seen in at least FIGS. 20, 21, and 22, according to such a partially overlapping or offset side-by-side arrangement, at least a portion of the first, proximate row unit 50a is positioned upstream of, or positioned at a more forward location relative to the direction the seeder 10 will travel while performing a seeding operation, than the second, distal row unit 50b.

Each of the proximal and distal segments 358, 360 are configured to be pivotally secured to a row unit 50a, 50b. For example, referencing FIGS. 19A and 19B, the ends of each of the upper and lower arms 306, 308 can include a row unit pin 366 that can be received in a mating aperture in an associated row unit 50a, 50b, and/or a mounting plate or bracket that is secured to the row unit 50a, 50b. Alternatively, the opposing ends of the upper and lower arms 306, 308 can each include an aperture that can accommodate receipt of a mating row unit pin 366 that is part of, or otherwise coupled to or received by, the associated row unit 50a, 50b, and/or an associated mounting plate or bracket that is secured to the row unit 50a, 50b. As seen in at least FIGS. 20 and 22, with such pivotal connections, the proximal ends 368 of the upper and lower arms 306, 308 can be pivoted, relative to the first row unit 50a, or vice versa, at or around seventh and eight pivot points 354g, 354h about associated seventh and eight pivot axes 356g, 356h, respectively. Similarly, the distal ends 370 of the upper and lower arms 306, 308 can be pivoted, relative to the second row unit 50b, or vice versa, at or around ninth and tenth pivot points 354i, 354j about associated ninth and tenth pivot axes 356i, 356j, respectively.

FIG. 23 illustrates an example in which the adjacent ground surface 372a upon which the row units 50a, 50b are traveling is relatively flat, but is elevated relative to the portion of the ground surface 372a along which wheels 348 of the seeder 10 are traveling. Compared to a situation in which the wheels 348 of the seeder 10 and row units 50a, 50b are traveling along the same relatively flat surface and are at relatively the same elevation, the increased elevation of the row units 50a, 50b in FIG. 23 can facilitate a raising of the upper and lower arms 306, 308 that are coupled to the row units 50a, 50b. As the upper and lower arms 306, 308 are coupled to the base unit 302, such upward displacement of the upper and lower arms 306, 308 facilitates the base unit 302 also being raised in the vertical direction.

To accommodate such upward displacement of the row units 50a, 50b, the upper and lower arms 306, 308, and the base unit 302 while maintaining an indirect connection between the row units 50a, 50b to the tool bar 22, the upper and lower main linkages 304a, 304b, which can be parallel to each other, are pivoted in similar manners relative to both the base unit 302 and the tool bar 22. Moreover, in the illustrated example, the upper and lower main linkages 304a, 304b have been rotated in a first, clockwise direction at the first, second, third, and fourth pivot points 354a-d, and about the corresponding first, second, third, and fourth pivot axes 356a-d. Thus, the angular orientation of the upper and lower main linkages 304a, 304b relative to at least the base unit 302 and the tool bar 22 has been changed to accommodate the elevated position of the row units 50a, 50b. In view of such rotational displacement, the first ends 310a of the upper and lower main linkages 304a, 304b can be higher than the second ends 310b of the upper and lower main linkages 304a, 304b. In such an orientation, the row units 50a, 50b are still positioned to plant seed into the ground in a direction that is generally perpendicular to the adjacent ground surface 372a, which may thereby assist in the seed being planted at a selected depth.

In FIG. 24 the row units 50a, 50b are traveling along an upwardly sloped surface that is at least partially curved. Accordingly, the wheels 348 of the seeder 10, which are again upstream of the row units 50a, 50b, are at a higher elevation, as well as being on at least a partial incline. In this example, the relative lower vertical position of the row units 50a, 50b can exert an at least partially downwardly force that can pull at least the upper and lower arms 306, 308 in a downward direction. As the upper and lower arms 306, 308 are coupled to the base unit 302, such downward displacement of the upper and lower arms 306, 308 can facilitate the base unit 302 also being lowered in the vertical direction. To accommodate such downward displacement of the row units 50a, 50b, the upper and lower arms 306, 308, and the base unit 302 while maintaining an indirect connection between the row units 50a, 50b to the tool bar 22, the upper and lower main linkages 304a, 304b, which, again, can be parallel to each other, can be pivoted relative to both the base unit 302 and the tool bar 22. Moreover, in the illustrated example, the upper and lower main linkages 304a, 304b have been rotated in a second, clockwise direction at the first, second, third, and fourth pivot points 354a-d, and about the corresponding first, second, third, and fourth pivot axes 356a-d, respectively. Thus, the angular orientation of the upper and lower main linkages 304a, 304b relative to at least the base unit 302 and the tool bar 22 has been changed to accommodate the elevated position of the row units 50a, 50b.

Additionally, in connection with accommodating the first row unit 50a being at a higher elevation than the second row unit 50b. and/or to accommodate the upwardly incline of the ground surface 372b, the upper and lower arms 306, 308 can be pivotally displaced at the upper and lower leg pins 352a, 352b, and moreover, at the fifth and sixth pivot points 354e, 354f about the associated fifth and sixth pivot axes 356e, 356f. In the illustrated example, such displacement of the upper and lower arms 306, 308 can be in the second, counterclockwise direction. Further rotational displacement can also occur at the proximal and distal ends 368, 370 of the upper and lower arms 306, 308, and moreover, at the seventh, eighth, ninth, and tenth pivot points 354g-j so as to accommodate the row units 50a, 50b maintaining an angular orientation that is generally perpendicular to the adjacent ground surface 372b.

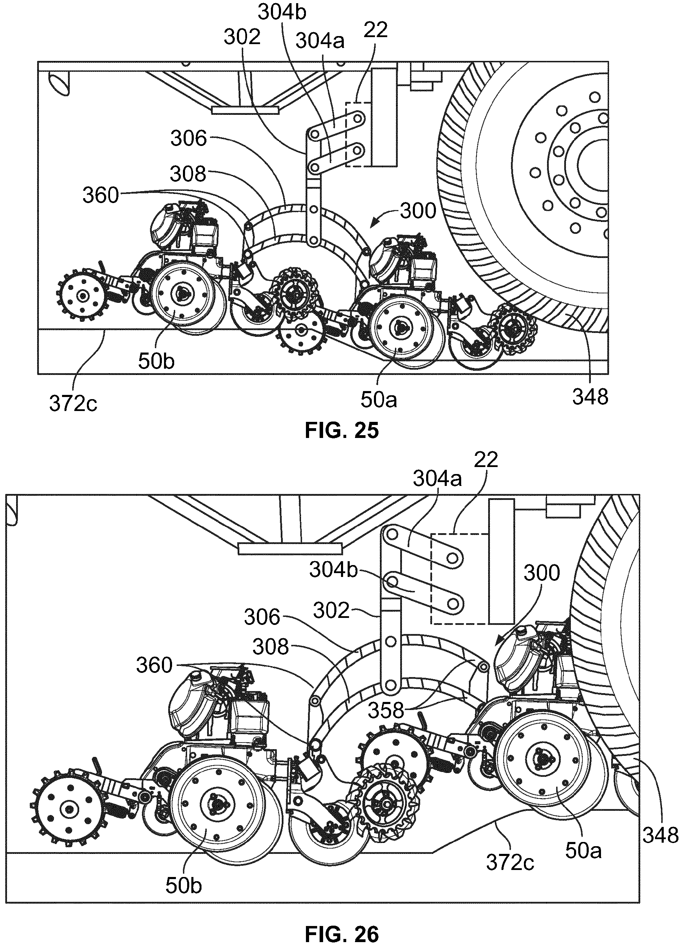

FIGS. 25 and 26 illustrate examples wherein one of the first and second row units 50a, 50b is at a lower elevation than the other row unit 50a, 50b while the row units 50a, 50b are each maintained at an angular orientation that is generally perpendicular to the ground surface 372c. As seen in FIG. 25, as the first row unit 50a is at a lower vertical height than the second row unit 50b, the upper and lower linkages 304a, 304b can be rotated about the corresponding first, second, third, and fourth pivot points 354a-d in the second, counterclockwise rotational direction such that the second ends 310b of the upper and lower linkages 304a, 304b are at a higher vertical height than the first ends 310a of the upper and lower linkages 304a, 304b. However, as with the other examples, in this example the upper and lower linkages 304a, 304b can retain a relatively parallel orientation with respect to each other.

While the upper and lower linkages 304a, 304b in the example provided by FIG. 25 can be rotated in the second, counterclockwise rotational direction to at least accommodate the lowering of the base unit 302, the upper and lower arms 306, 308 can be rotated in the first, clockwise rotational direction. Accordingly, such rotation of the upper and lower arms 306, 308 can occur at the fifth and sixth pivot points 354e, 354f. Additionally, to further facilitate the row units 50a, 50b being at an orientation that is generally perpendicular to the ground surface 372c, the proximal and distal ends 368, 370 of the upper and lower arms 306, 308 can accommodate changes in the angular orientation of the row units 50a, 50b relative to the upper and lower arms 306, 308. Thus, for example, in such situations, the angular orientation of the row units 50a, 50b can be change at the associated seventh, eighth, ninth, and tenth pivot points 354g-j relative to the upper and lower arms 306, 308.

Unlike the example provided by FIG. 25, in FIG. 26 the first row unit 50a is at a higher vertical height than the second row unit 50b. In such an example, the upper and lower linkages 304a, 304b have been rotated about the first, second, third, and fourth pivot points 354a-d in the first, clockwise rotational direction such that the second ends 310b of the upper and lower linkages 304a, 304b are at a lower vertical height than the first ends 310a of the upper and lower linkages 304a, 304b. However, again, in this example the upper and lower linkages 304a, 304b can retain a relatively parallel orientation with respect to each other. While the upper and lower linkages 304a, 304b in the example provided by FIG. 26 can be rotated in the first, clockwise rotational direction to at least accommodate the raising of the base unit 302, the upper and lower arms 306, 308 can be rotated in the second, counterclockwise rotational direction. Accordingly, such rotation of the upper and lower arms 306, 308 can occur at the fifth and sixth pivot points 354e, 354f, respectively. Additionally, to further maintain the row units 50a, 50b being at an orientation that is generally perpendicular to the ground surface 372c, the proximal and distal ends 368, 370 of the upper and lower arms 306, 308 can accommodate changes in the angular orientation of the row units 50a, 50b relative to the upper and lower arms 306, 308. Thus, for example, in such situations, the angular orientation of the row units 50a, 50b can be change at the associated seventh, eighth, ninth, and tenth pivot points 354g-j relative to the upper and lower arms 306, 308.

FIGS. 27A and 27B illustrate a fourth embodiment of a row unit coupling device 400. As seen in at least FIGS. 28-34, the row unit coupling device 400 is configured to couple a pair of row units 50a, 50b to a tool bar 22 in a manner that provides a third parallelogram linkage arrangement. The coupling device 400 can be constructed from a variety of materials, including, but not limited to metal and/or steel, among other materials and alloys. Further, according to certain embodiments, the coupling device 400 can be constructed, at least in part, from metallic bars or tubing that can have various cross sectional shapes, and/or can be formed via casting.

According to the illustrated embodiment, the row unit coupling device 400 includes a midarm or base unit 402, an upper arm 404, and a lower arm 406. The base unit 402 can include an upper portion 408 and a lower portion 410. According to the illustrated embodiment, the upper portion 408 is configured to be coupled to the tool bar 22. The upper portion 408 can be coupled to the tool arm 22 in a variety of manners, including, for example, via one or more mechanical fasteners, including, but not limited to, bolts, screws, and/or pins, or via a weld or compression fit, among other manners of connection. Alternatively, according to other embodiments, the upper portion 408 can be an integral portion of the tool bar 22.

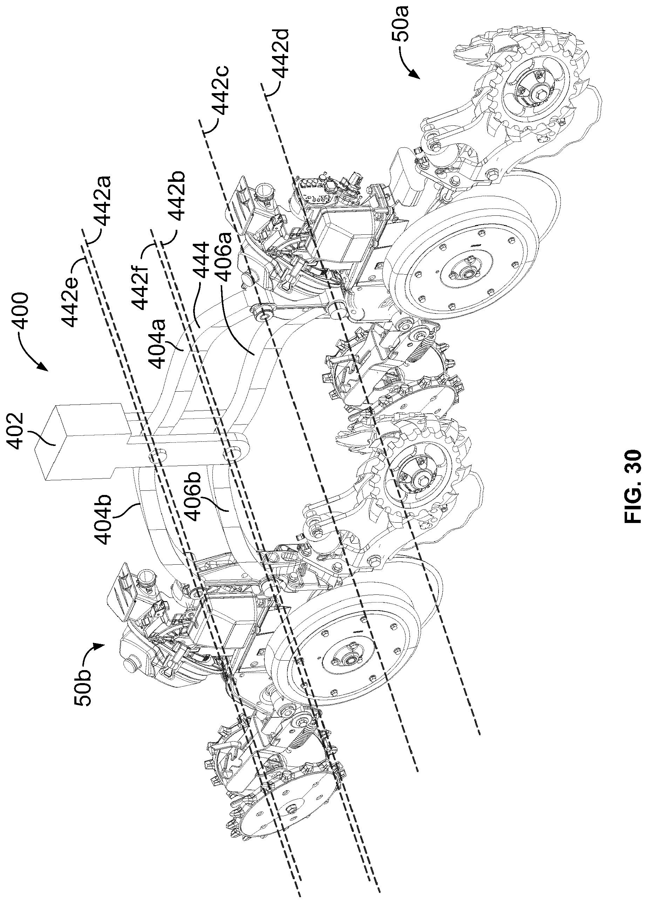

The lower portion 410 of the base unit 402 can comprise a first leg segment 412a and a second leg segment 412b that are spaced apart to provide a base cavity 414 therebetween that can accommodate displaceable placement of at least a portion of each of the upper and lower arms 404, 406. As seen in at least FIGS. 27A and 27B, the first and second leg segments 412a, 412b can downwardly extend from the upper portion 408 of the base unit 402. According to the illustrated embodiment, the upper arm 404 can comprise a first upper arm segment 404a and a second upper arm segment 404b, and the lower arm 406 can comprise a first lower arm segment 406a and a second lower arm segment 406b. Each of the first and second upper and lower arm segments 404a, 404b, 406a, 406b can be pivotally coupled to the lower portion 410 of the base unit 402, such as, for example, to the leg segments 412a, 412b of the lower portion 410. Additionally, as illustrated in at least FIGS. 27B and 28, according to certain embodiments, the first and second upper arm segments 404a, 404b can configured to be pivotally displaced about the same, first pivot point 420a at the upper leg pin 418a, while the first and second lower arm segments 406a, 406b can be configured to be pivotally displaced about the same, second pivot point 420b at the lower leg pin 418b. Such a construction can accommodate independent pivotal displacement of the first and second upper arm segments 404a, 404b at the first pivot point 420a about a first pivot axis 442a (FIG. 30), as well as independent pivotal displacement of the first and second lower arm segments 406a, 406b at the second pivot point 420b about a second pivot axis 442b (FIG. 30). Further, as seen in FIG. 30, according to certain embodiments, the first and second pivot axes 442a, 442b can be generally parallel, and offset from, each other.

The first and second upper arm segments 404a, 404b and the first and second lower arm segments 406a, 406b can be coupled to the associated leg pin 418a, 418b in a variety of manners. For example, FIG. 27C provides one exemplary depiction of the first ends 422 of the first and second upper arm segments 404a, 404b having a mating tongue and groove configuration. According to such a construction, one of the first and second arm segments 404a, 404b can have a tongue 424 that can be received at a depth within a groove 426 that is in the other of the first and second arm segments 404a, 404b so as to align apertures 428 that are located at the first ends 422 of the first and second arm segments 404a, 404b. Moreover, such an arrangement can accommodate the apertures 428 at the first ends 422 of the first and second arm segments 404a, 404b being aligned so as to each receive the upper leg pin 418a that, when the first ends 422 of the first and second arm segments 404a, 404b are positioned in the cavity 414, is also received and positioned in adjacent upper leg apertures 416a in the leg segments 412a, 412b. Such a configuration can accommodate the first upper arm segment 404a being capable of being pivotally displaced independent of the second upper arm segment 404b, as well as the second upper arm segment 404b being capable of being pivotally displaced independent of the first upper arm segment 404a.

While the foregoing is discussed with respect to the first and second upper arm segments 404a, 404b, the first and second lower arm segments 406a, 406b can have a similar tongue and groove construction, among other manners of being pivotally coupled at the same location. Moreover, again referencing FIG. 27C, the lower leg pin 418b can extend through similar apertures 428 in the first ends 422 of the first and second lower arm segments 406a, 406b, as well as into the adjacent lower leg apertures 416b in the leg segments 412a, 412b of the lower portion 410 of the base unit 402. Such an arrangement can thus similarly accommodate pivotal displacement of the first lower arm segment 406a being independent of the second lower arm segment 406b, as well as the second lower arm segment 406b being pivotally displaceable independent of the first lower arm segment 406a.

Additionally, while the foregoing discusses the first and second upper arm segments 404a, 404b being pivotally coupled to the same upper leg pin 418a, and the first and second lower arm segments 406a, 406b being pivotally coupled to the same lower leg pin 418b, according to other embodiments, each arm 404a, 404b, 406a, 406b can be separately pivotally coupled to the base unit 402. For example, according to certain embodiments, the upper leg pin 418a can comprise a first upper leg pin and a second upper leg pin, the first upper leg pin being configured to pivotally couple the first upper arm segment 404a to the base unit 402 through one or more first upper apertures, and the second upper leg pin being configured to pivotally couple the second upper arm segment 404b to the base unit 402 through one or more second upper apertures. Similarly, the lower leg pin 418b can comprise a first lower leg pin and a second lower leg pin, the first lower leg pin being configured to pivotally couple the first lower arm segment 406a to the base unit 402 through one or more first lower apertures, and the second lower leg pin being configured to pivotally couple the second lower arm segment 406b to the base unit 402 through one or more second lower apertures.

Referencing FIGS. 27A and 27B, the upper and lower arms 404, 406 can each extend from a proximal segment 434 to a distal segment 436. Thus, in such an arrangement, the second end 438 of the first upper arm segment 404a and the first lower arm segment 406a can each be at the proximal segment 434 of the upper arm 404 and lower arm 406, respectively, and the second end 438 of the second upper arm segment 404b and the second lower arm segment 406b can each be at the distal segment 436 of the upper arm 404 and lower arm 406, respectively. Aside from features relating to independent displacement of the arm segments 404a, 404b, 406a, 406b, the upper and lower arms 404, 406 can have a shape that is similar to the shape discussed above with respect to upper and lower arms 206, 208, respectively, and as shown above in at least FIG. 12. Thus, similar to the proximal and distal segments 258, 260 of the upper and lower arms 206, 208, the proximal and distal segments 434, 436 of the upper and lower arms 404, 406 can both similarly extend away from a central segment 440 in at least the first direction (as generally indicated by "*D*₁" shown in FIG. 12), such as, for example in a direction perpendicular to both the first and second pivot axes 442a, 442b and the direction in which the upper portion 408 and lower portion 410 of the base unit 402 extend away from each other. Additionally, as seen in at least FIG. 27A, at least the proximal and distal segments 434, 436 can have a downwardly inclined, sloped, and/or curved configuration. Thus, according to certain embodiments, at the angular orientations shown in at least FIGS. 27A and 27B, the upper and lower arms 404, 406 can have a generally downwardly curved shape.

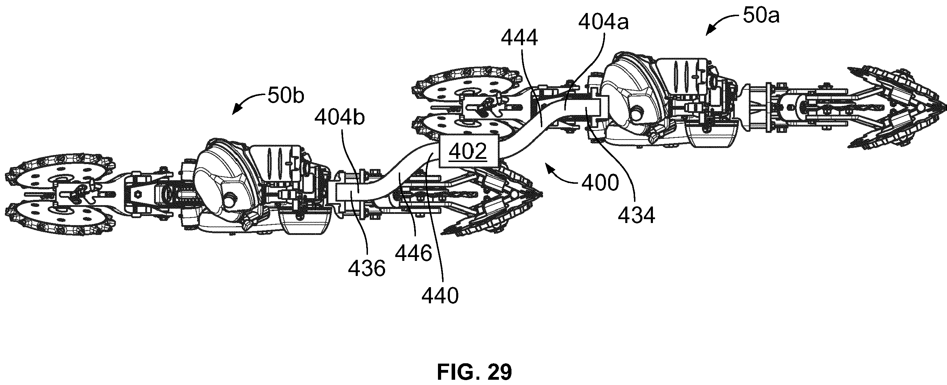

The proximal and distal segments 434, 436 can also be offset from the central segment 440, as well as from each other. For example, as seen in at least FIG. 29, and as similarly illustrated in FIG. 12 with respect to the similar configurations of the upper and lower arms 206, 208, the proximal and distal segments 434, 436 of the upper and lower arms 404, 406 can be located on opposing sides of the central segment 440. Such offsetting of the proximal and distal segments 434, 436 can be provided at least by a first offset segment 444 that extends between the central segment 440 and the proximal segment 458, and a second offset segment 446 that extends between the central segment 440 and the distal segment 460. In addition to downwardly extending from opposing ends of the central segment 440, the first and second offset segments 444, 446 can extend in opposing outwardly directions. For example, similar to the first and second offset segments 262, 264 of the upper and lower arms 206, 208 shown in at least FIG. 12, one of the first and second offset segments 444, 446 can outwardly extend in a generally right side direction relative to the sidewalls 448a, 448b of the central segment 440, and the other of the first and second offset segments 444, 446 can outwardly extend in an, opposing, generally left side direction.

The degree or extent to which the first and second offset segments 444, 446 extend in opposing outwardly directions relative to at least the central segment 440 can be based, at least in part, on the widths of the row units 50a, 50b that will be coupled to the upper and lower arms 404, 406. Moreover, as seen in at least FIG. 29, at least the first and second offset segments 444, 446 can be configured to accommodate at least a partially overlapping or offset side-by-side arrangement of the row units 50a, 50b that are attached to the upper and lower arms 404, 406 in a manner that can also minimize the distance between furrows 18 formed by the row units 50a, 50b, and thus minimize crop row spacing. Thus, as seen in at least FIGS. 28-30, according to such a partially overlapping or offset arrangement, at least a portion of the first, proximate row unit 50a is positioned upstream of, or positioned at a more forward location relative to, the direction at which seeder 10 will travel while performing a seeding operation, than the second, distal row unit 50b.

Each of the proximal and distal segments 434, 436 are configured to be pivotally secured to a row unit 50a, 50b. For example, referencing FIGS. 27A and 27B, the ends of each of the upper and lower arms 404, 406 can include a row unit pin 448 that can be received in a mating aperture in an associated row unit 50a, 50b, and/or a mounting plate or bracket that is secured to the row unit 50a, 50b. Alternatively, the opposing ends of the upper and lower arms 404, 406 can each include an aperture that can accommodate receipt of a mating row unit pin 448 that is part of, or otherwise coupled to or received by, the associated row unit 50a, 50b and/or an associated mounting plate or bracket that is secured to the row unit 50a, 50b. As seen in at least FIGS. 28 and 30, with such pivotal connections, the second ends 430 of the first upper and lower arm segments 404a, 406a can be pivoted relative to the first row unit 50a, or vice versa, at or around third and fourth pivot points 420c, 420d and about associated third and fourth pivot axes 442c, 442d. Similarly, the second ends 430 of the second upper and lower arms 404b, 406b can be pivoted relative to the second row unit 50b, or vice versa, at or around fifth and sixth pivot points 420e, 420f and about associated fifth and sixth pivot axes 442e, 442f.

FIG. 31 illustrates an example in which the adjacent ground surface 450a upon which the row units 50a, 50b are traveling is at a higher elevation than the seeder 10, and the wheels 48 of the feeder 10 are traveling along a downwardly sloped surface. As seen, in at least an attempt to maintain the row units 50a, 50b at orientations at which the row units 50a, 50b are generally perpendicular to the adjacent ground surface 450a, the upper and lower arm segments 404a, 404b, 406a, 406b have each been rotated at least at their respective first and second pivot points 420a, 420b. More specifically, such a change in at least the vertical height of the row units 50a, 50b relative to the tool bar 22 has resulted in the first upper and lower arm segments 404a, 406a, which are coupled to the first row unit 50a, having been rotated, independent of the second upper and lower arm segments 404b, 406b, in the second, counterclockwise direction. Conversely, such a change in relative vertical positions has also resulted in the second upper and lower arm segments 404b, 406b, which are coupled to the second row unit 50b, having been rotated, independent of the first upper and lower arm segments 404a, 406a, in the first, clockwise direction. Thus, in such a scenario, the second ends 430 of the first and second upper arm segments 404a, 404b, and the second ends 430 of the first and second lower arm segments 406a, 406b, can be rotated in a direction generally toward the upper portion 408 of the base unit 402. Additionally, to further accommodate the row units 50a, 50b being at an orientation that is generally perpendicular to the adjacent ground surface 450a, in connection with the pivotal displacement of the first upper and lower arms 404a, 406a about the first pivot point 420a, the first upper and lower arms 404a, 406a can be pivotally displaced relative to the first row unit 50a about the row unit pins 448 at the third and fourth pivot points 420c, 420d. Similarly, in such a situation, the second upper and lower arms 404b, 406b can also be pivotally displaced relative to the second row unit 50b about the row unit pins 448 at the fifth and sixth pivot points 420e, 420f.

FIG. 32 illustrates another exemplary scenario for use of the row unit coupling device 400 in which the ground surface 450b adjacent to the row units 50a, 50b has a generally concave shape. Compared to FIG. 31, in the example provided by FIG. 32, the row units 50a, 50b are at least at a lower vertical height relative to the tool bar 22. Accordingly, the upper and lower arm segments 404a, 404b, 406a, 406b have again each been rotated at least at their respective first and second pivot points 420a, 420b. More specifically, such a reduction in the vertical heights of the row units 50a, 50b has resulted in the first upper and lower arm segments 404a, 406a, which are coupled to the first row unit 50a, being rotated, independent of the second upper and lower arm segments 404b, 406b, in the first, clockwise direction. Conversely, such a change in relative vertical positions has also resulted in the second upper and lower arm segments 404b, 406b, which are coupled to the second row unit 50b, being rotated, independent of the first upper and lower arm segments 404a, 406a, in the second, counterclockwise direction. Thus, in such a scenario, the second ends 430 of the first and second upper arm segments 404a, 404b, and the second ends 430 of the first and second lower arm segments 406a, 406b, can be rotated in a direction generally away from the upper portion 408 of the base unit 402. Additionally, to further accommodate the row units 50a, 50b being at an orientation that is generally perpendicular to the adjacent ground surface 450a, in connection with the pivotal displacement of the first upper and lower arms 404a, 406a about the first pivot point 420a, the first upper and lower arms 404a, 406a can again be pivotally displaced relative to the first row unit 50a about the row unit pins 448 at the third and fourth pivot points 420c, 420d. Similarly, in such a situation, the second upper and lower arms 404b, 406b can also again be pivotally displaced relative to the second row unit 50b about the row unit pins 448 at the fifth and sixth pivot points 420e, 420f.

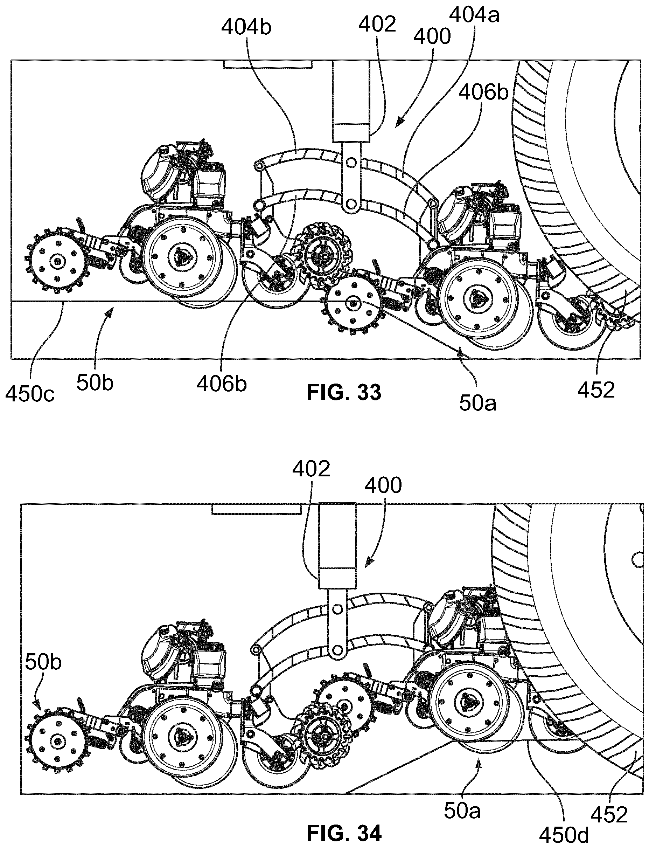

FIGS. 33 and 34 illustrate examples wherein one of the first and second row units 50a, 50b is at a lower elevation than the other row unit 50a, 50b while the row units 50a, 50b are each maintained at an orientation that is generally perpendicular to the ground surface 450c, 450d. As seen in FIG. 33, as the first row unit 50a is at a lower vertical height than the second row unit 50b, the first upper and lower arm segments 404a, 406a that are coupled to the first row unit 50a can be rotated about the first and second pivot points 420a, 420b in the first, clockwise rotational direction such that the second ends 430 of the first upper and lower arm segments 404a, 406a are at a lower vertical height than the first ends 422 of the first upper and lower arm segments 404a, 406a. However, given the position of the second row unit 50b relative to at least the tool bar 22 and the relatively flat and higher area of the ground surface 450c along which the second row unit 50b is currently positioned, the second upper and lower arm segments 404a, 406b that are coupled to the second row unit 50b may not have yet been rotated, or, alternatively, may have been thus far rotated to a lesser extent than the first upper and lower arm segments 404a, 406a.

As with FIG. 35, in FIG. 36 the first upper and lower arm segments 404a, 406a that are coupled to the first row unit 50a have been rotated about the first and second pivot points 420a, 420b to accommodate the current position/orientation of the first row unit 50a. Similarly, the second upper and lower arm segments 404b, 406b that are coupled to the second row unit 50b have also been rotated, independent of the first upper and lower arm segments 404, 406b, about the first and second pivot points 420a, 420b to accommodate the current position/orientation of the second row unit 50b. In such scenarios, rotational displacement of the first upper and lower arm segments 404a, 406a is independent of the second upper and lower arm segments 404b, 406b, and vice versa. Additionally, rotational displacement of the row units 50a, 50b relative to the associated upper and lower arm segments 404a, 404b, 406a, 406b can again accommodate the row units 50a, 50b maintaining an orientation that is generally perpendicular to the adjacent ground surface 450c, 450d, thereby assisting in planting seeds by the row units 50a, 50b at or around selected depths within the ground.

While the disclosure has been illustrated and described in detail in the foregoing drawings and description, the same is to be considered as exemplary and not restrictive in character, it being understood that only illustrative embodiments thereof have been shown and described and that all changes and modifications that come within the spirit of the disclosure are desired to be protected.

## Claims

1. A row unit coupling device (100) for securing a first row unit (50a) and a second row unit (50b) to a tool bar (22) of an agricultural implement, the row unit coupling device (100) comprising:
a swing arm (102) having a first end (126) and a second end (128), the first end (126) configured for pivotal coupling to the tool bar (22); and
a walking beam (104) having a central beam (138), a first row adapter (140a), and a second row adapter (140b), the central beam (138) having a proximal end (116) and a distal end (118), the first row adapter (140a) and the second row adapter (140b) secured to the central beam (138) on opposing sides of a position at which the swing arm (102) is pivotally coupled to the central beam (138), the first row adapter (140a) configured to be coupled to the first row unit (50a), the second row adapter (140b) configured to be coupled to the second row unit (50b).

2. The row unit coupling device (100) of claim 1, wherein the first row adapter (140a) is positioned at or around the proximal end (116) of the central beam (138), and the second row adapter (140b) is positioned at or around the distal end (118) of the central beam (138).

3. The row unit coupling device (100) of claim 1 or 2, wherein the first row adapter (140a) extends from the central beam (138) in a first direction, and the second row adapter (140b) extends from the central beam (138) in a second direction, the first direction being opposite to the second direction, the first and second directions being perpendicular to a direction that the central beam (138) extends from the distal (116) end to the proximal end (118).

4. The row unit coupling device (100) of one of the claims 1 to 3, wherein the second end (128) of the walking beam (104) is pivotally coupled to the central beam (138) at a location adjacent to the distal end (118) of the central beam (138).

5. The row unit coupling device (100) of one of the claims 1 to 4, wherein the first row adapter (140a) is separated from the second row adapter (140b) by a distance at which, when the first row unit (50a) is coupled to the first row adapter (140a) and the second row unit (50b) is coupled to the second row adapter (140b), the first and second row units (50a, 50b) are in a partial overlapping side-by-side alignment.
